(19) Europäisches Patentamt
European Patent Office
Office européen des brevets

(11) **EP 1 169 837 B1**

(12) **FASCICULE DE BREVET EUROPEEN**

(45) Date de publication et mention
de la délivrance du brevet:
**02.05.2007 Bulletin 2007/18**

(51) Int Cl.:
***H04L 29/06*** *(2006.01)*

(21) Numéro de dépôt: **01907761.9**

(86) Numéro de dépôt international:
**PCT/FR2001/000395**

(22) Date de dépôt: **09.02.2001**

(87) Numéro de publication internationale:
**WO 2001/060018 (16.08.2001 Gazette 2001/33)**

(54) **PROCEDE DE GESTION DE TRANSMISSIONS DE DONNEES MULTIMEDIAS VIA INTERNET ET CARTE A PUCE POUR LA MISE EN OEUVRE DU PROCEDE**

VERFAHREN ZUR VERWALTUNG DER INTERNETMULTIMEDIADATENÜBERTRAGUNG UND CHIPKARTE ZUR DURCHFÜHRUNG DES VERFAHRENS

METHOD FOR MANAGING MULTIMEDIA DATA TRANSMISSION VIA INTERNET AND SMART CARD THEREFOR

(84) Etats contractants désignés:
**AT BE CH CY DE DK ES FI FR GB GR IE IT LI LU MC NL PT SE TR**

(30) Priorité: **10.02.2000 FR 0001663**

(43) Date de publication de la demande:
**09.01.2002 Bulletin 2002/02**

(73) Titulaire: **CP8 TECHNOLOGIES**
**78431 Louveciennes (FR)**

(72) Inventeur: **URIEN, Pascal**
**F-78450 Villepreux (FR)**

(74) Mandataire: **Cassagne, Philippe M.J. et al**
**Axalto SA**
**IP & Licensing Department**
**Bat 4-507**
**6, rue de la Verrière**
**92197 Meudon Cedex (FR)**

(56) Documents cités:
**WO-A-98/57474**          **FR-A- 2 760 159**

**Description**

L'invention concerne un procédé de gestion de transmissions de données multimédias via un réseau de type Internet à l'aide de cartes à puce connectées à des terminaux munis d'un lecteur de carte à puce.

L'invention concerne plus particulièrement la gestion de transmissions téléphoniques ou visiophoniques via un réseau de type Internet.

L'invention concerne également une carte à puce pour la mise en oeuvre de ce procédé.

Les transmissions précitées peuvent s'effectuer soit entièrement sur le réseau de type Internet, soit en partie sur ce réseau et en partie sur un réseau téléphonique standard (par exemple de type commuté), via une passerelle matérielle et logique appropriée.

Pour fixer les idées, et sans limiter en quoi que ce soit la portée de l'invention, on va décrire le procédé dans le cadre de l'application préférée, à savoir la téléphonie via un réseau Internet.

Dans le cadre de l'invention, le terme "réseau Internet" doit être compris dans son sens le plus général. Il concerne, outre le réseau Internet proprement dit, les réseaux privés d'entreprises ou similaires, du type dit "intranet", et les réseaux les prolongeant vers l'extérieur, du type dit "extranet"; et de façon générale tout réseau dans lequel les échanges de données s'effectuent selon un protocole du type Internet. Dans ce qui suit un tel réseau sera appelé de façon générique "réseau Internet".

De même, le terme "terminal" doit être compris dans un sens général. Le terminal précité peut être notamment constitué par un ordinateur personnel fonctionnant sous divers systèmes d'exploitation, tels WINDOWS ou UNIX (tous deux étant des marques déposées). Il peut être aussi constitué par une station de travail, un ordinateur portable ou un terminal de carte dit dédié.

Avec l'essor spectaculaire du réseau Internet ces dernières cinq années, un nombre toujours croissant de terminaux sont connectés à ce réseau, notamment pour pouvoir être en liaison avec des serveurs éloignés, de type "WEB". Il existe des limitations quant aux données transitant par les liaisons composant les mailles du réseau Internet. Cependant, ces limitations ne sont pas liées en premier lieu à la nature des données, mais surtout au débit permis par les liaisons. La mise en place récente de liaisons à haut débit (câble, liaison de type "ADSL", liaison par satellites, RNIS, etc.) permet désormais de véhiculer des données de type multimédia et de les traiter en temps réel.

Aussi, il est notamment intéressant de faire transiter par le réseau Internet des communications téléphoniques, voire de la visiophonie. Les transmissions des données elles-mêmes ne posent pas de problèmes particuliers. Elles peuvent être traitées par les protocoles habituellement utilisés sur ce type de réseau. Cependant, la gestion des communications pose des problèmes spécifiques, notamment des problèmes liés à ce qui est appelé en téléphonie classique la "signalisation". De façon générale, ce concept désigne des opérations telles que : appel d'un correspondant, acceptation d'un appel, début et fin d'une conversation, sonnerie, décrochage du combiné, etc.

Dans les années 90, un grand nombre de systèmes et logiciels ont été proposés pour pouvoir réaliser des appels téléphoniques via le réseau Internet.

Le premier téléphone sur Internet, appelé "Internet Phone" (marque déposée) a été développé par la société Vocaltec en 1995. On compte aujourd'hui des dizaines de produits : "WebPhone", "NetMeeting" de la société Microsoft (tous deux marques déposées), etc.

L'état de la technique qui en résulte se distingue donc par une grande diversité et un manque de normes ou, pour le moins, de standards de fait. Il s'ensuit que ces produits ne sont pas inter-opérables.

Cependant, on peut observer les tendances actuelles suivantes :

a/ utilisation d'un port de type "TCP" pour réaliser une pseudo signalisation (notification d'un appel, identification de l'appelant en vue de l'acceptation rejet de l'appel, etc.) ;
b/ compression du signal sonore, par exemple selon le procédé UIT-T G723 (Union Internationale des Télécommunications) de 5,3 Kbps à 6,3 Kbps ;
c/ diffusion du son en ayant recours au protocole "RTP" (pour "Real Time Protocol" conforme à la spécification RFC 1889), qui utilise lui-même le protocole de transmission "UDP" (pour "User Datagram Protocol"), des "PDUs" ("Protocol Data Unit") datées, et qui est associé à un protocole de contrôle "RTCP" (pour "Real Time Transport Control Protocol") ; et
d/ identification de l'appelé par son adresse "IP", de nombreux serveurs permettant d'associer à une adresse courrier fixe, une adresse "IP" délivrée par un serveur de type "PPP" d'un prestataire de service ou "provider" ("ISP" ou "Internet Service Provider", selon la terminologie anglo-saxonne, un serveur connu sous le sigle "ICQ" par exemple.

Lorsque les communications doivent sortir du réseau Internet, des passerelles Internet téléphoniques dite "ITG" (pour "Internet Telephony Gateway") permettent de relier un réseau public de type commuté ("RTC"), connu généralement sous le sigle anglo-saxon "PSTN" (pour "Public Switched Telephone Network") au réseau Internet. Le protocole "H323" qui définit le format des paquets utilisés dans les réseaux locaux et sur un réseau "RNIS" ("Réseau Numérique à Intégration de Services" ou "ISDN" selon la terminologie anglo-saxonne) semble devenir le standard dominant des protocoles d'appels dits "CCP" (pour "Call Control Protocol").

La téléphonie sur Internet pose trois types de problèmes principaux :

a/ la localisation de l'abonné dans le réseau, c'est à dire l'établissement d'une relation adresse "IP" (d'une machine informatique)-abonné ;

b/ la gestion de la signalisation d'un appel téléphonique (appel du correspondant, acceptation de l'appel, début de conversation, fin de conversation) : cette fonction est réalisée par un protocole dit "propriétaire" (généralement désigné sous le vocable "Protocole Propriétaire de Signalisation" ou "PSP") pour les appels de type "internet/internet", ou par un protocole particulier qui tend à se standardiser (le protocole "CCP" précité) pour les appels de type "Internet/RTC", la signalisation étant réalisée au moyen d'un connexion "TCP" qui sera appelée ci-après "Canal de Signalisation" ou "CS" ; et

c/ l'échange d'un flux de données multimédias : le protocole adopté est généralement le protocole dit "RTP" (pour "Real Time Protocol", conforme à la spécification "rfc 1889" précitée), l'échange des données multimédias est réalisé à travers un canal de donnée, et les informations sont transportées par le protocole "UDP" précité.

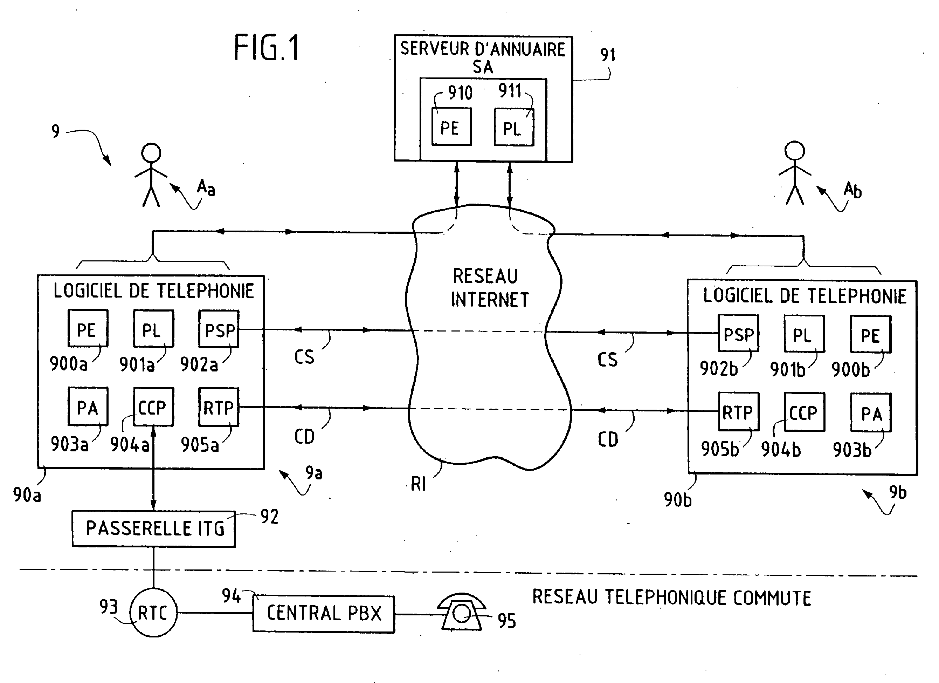

Pour établir une conversation téléphonique sur internet l'appelant et l'appelé doivent utiliser le même logiciel. La figure 1 illustre schématiquement les modules principaux composant un logiciel de téléphonie ("LT"), par exemple le logiciel "Netmeeting" précité. Schématiquement, un logiciel de téléphonie classique et l'architecture du système de transmission associée comportent les sous ensembles suivants :

a/ un profil d'abonné ("PA"), qui contient une suite d'informations qui permettent l'identification d'un abonné ;

b/ un protocole d'enregistrement ("PE") qui réalise l'enregistrement d'un abonné sur un serveur d'annuaire ("SA" - identifié par un numéro de port "TCP" particulier, par exemple le port N° 389) ;

c/ un protocole de localisation ("PL") qui réalise une fonction de recherche d'un abonné à partir de son identifiant (généralement un e-mel), cette fonction étant mise en oeuvre au moyen d'une connexion au serveur d'annuaire ("SA") ;

d/ un canal de signalisation ("CS"), qui met en oeuvre un protocole de signalisation propriétaire ("PSP"), qui gère un appel téléphonique à travers une connexion TCP sur un port particulier (N° 1503 pour Netmeeting) ; et

e/ un canal de données (CD) qui gère l'échange des données temps réels (le son et/ou l'image) à l'aide d'un protocole d'échange de données, tel que "RTP".

De manière optionnelle, le logiciel de téléphonie sur Internet peut émettre un appel vers un abonné du réseau téléphonique standard, en utilisant un protocole de gestion d'appel ("CCP") au moyen d'un connexion "TCP" (sur le port N° 1731 dans le cas du logiciel "Netmeeting").

La figure 1, annexée à la présente description, illustre schématiquement l'architecture d'un système de téléphonie 9 via le réseau Internet *RI,* selon l'art connu, et mettant en oeuvre un logiciel de téléphonie du type qui vient d'être décrit.

Sur cette figure, on a représenté schématiquement deux terminaux, 9*a* et 9*b* respectivement, réduits aux seuls logiciels de téléphonie les équipant, 90*a* et 90*b*.

Les composants de ces logiciels comprennent, pour chaque terminal, 9*a* ou 9*b*, un protocole d'enregistrement "PE", 900a ou 900*b*, associé à un profil d'abonné ("PA"), 903*a* ou 903*b*, et un protocole de localisation "PL", 901*a* ou 901*b*. Un profil d'abonné "PA" comprend un identifiant de base d'un abonné, *Aa* ou A*b*, généralement connu sous l'appellation "UserID", et diverses données qui seront précisées ci-après identifiant de façon plus complète cet abonné.

Le protocole d'enregistrement "PE", 900*a* ou 900*b*, permet aux abonnées, *Aa* et Ab, associés aux terminaux, 9*a* ou 9*b*, de s'enregistrer dans un serveur d'annuaire 91 connecté au réseau Internet *RI.* Les enregistrements s'effectuent en utilisant des données d'identification contenues dans les profils d'abonné "PA" précités, 903*a* ou 903*b*.

Lorsque l'on désire établir une communication entre deux abonnées, il est nécessaire de procéder à une phase de localisation de l'abonné appelé. Par exemple, si le terminal 9*a* doit être mis en communication avec le terminal 9*b,* il est nécessaire de connaître l'adresse "IP" du terminal 9*b* sur le réseau Internet *RI.*

En soi, ces processus sont communs à la téléphonie classique sur un réseau commuté pur. Il est attribué un numéro d'appel à chaque abonné, numéro répertorié dans un ou plusieurs annuaires.

Cependant, le recours à un réseau Internet pour assurer les transmissions téléphoniques entre abonnés, ou ce qui revient au même entre terminaux, impose des contraintes spécifiques.

Il apparaît tout d'abord utile de rappeler brièvement les caractéristiques principales des protocoles de communication sur les réseaux.

L'architecture des réseaux de communication est décrite par diverses couches. A titre d'exemple, le standard "OSI" ("Open System Interconnection"), défini par l' "ISO", comporte sept couches qui vont des couches dites basses (par exemple la couche dite "physique" qui concerne le support de transmission physique) aux couches dites hautes (par exemple la couche dite "d'application"), en passant par des couches intermédiaires, notamment la couche dite de "transport". Une couche donnée offre ses services à la couche qui lui est immédiatement supérieure et requiert de la couche qui lui immédiatement inférieure d'autres services, via des interfaces appropriées. Les couches communiquent à l'aide de primitives. Elles peuvent également communiquer avec des couches de même niveau. Dans certaines architectures, plusieurs couches peuvent être inexistantes.

Dans un environnement de type Internet, les couches sont au nombre de cinq, et de façon plus précise, en allant de la couche supérieure à la couche inférieure : la couche dite d'application ("HTTP", "FTP", "e-mail", etc.), la couche dite de transport ("TCP"), la couche dite d'adressage de réseau ("IP"), la couche dite de liens de données ("PPP", "Slip", etc.) et la couche dite physique.

Dans l'art connu, les abonnés, *Aa* et *Ab,* utilisent des terminaux Internet, 9*a* ou 9*b,* qui possèdent une adresse "IP" fixe, ou variable lorsque l'on a recours à un prestataire de service Internet, généralement connu sous le sigle anglo-saxon "ISP" (pour "Internet Service Provider").

Un premier inconvénient est constitué par le fait qu'une adresse "IP" n'est pas associée à un abonné, mais à un système informatique connecté au réseau Internet. Même dans le cas où le système informatique est doté d'une adresse fixe, il n'existe pas de correspondance a *priori* entre une adresse "IP" et une personne physique. De façon pratique, pour établir une telle relation l'abonné se connecte au serveur d'annuaire "SA" 91 (qui peut par exemple être du type dit "IRC", pour "Internet Relay Chat"). Ce serveur associe à l'identifiant de l'abonné, ou "UserID", son adresse "IP". L'identifiant est généralement constitué par son adresse courrier e-mel, ou "e-mail" selon la terminologie anglo-saxonne, mais un pseudonyme quelconque peut également être utilisé.

Cette association n'est généralement pas authentifiée de telle sorte que le service (habituellement gratuit) puisse être utilisé de la manière la plus commode possible. Cette disposition n'est cependant pas exempte d'inconvénients, en particulier pour des applications dites "sensibles".

Une des premières contraintes rencontrées est donc la localisation d'un abonné dans le réseau Internet *RI,* c'est à dire l'établissement d'une correspondance entre un identifiant fixe et une adresse "IP".

La localisation d'un abonné sur le réseau Internet *RI,* c'est-à-dire l'établissement de la correspondance précitée, présuppose que celui-ci ait été au préalable enregistré dans le serveur d'annuaire "SA".

L'adresse d'un abonné dans le réseau Internet est donc constitué du couple : "Adresse SA" - "User Id". De façon usuelle, par "abonné", on entend une entité "physique". Par extension, il peut s'agir d'une "fonction". Cependant, ci-après, on donnera à "abonné" son sens commun, sans que cela soit limitatif en quoi que ce soit de la portée de l'invention.

De façon pratique, un abonné indique sa localisation dans le réseau Internet *RI* par un acte volontaire en fournissant au serveur (annuaire) son adresse "IP" actuelle à l'aide du protocole d'enregistrement précité "PE".

Cette opération implique que le terminal, 9*a* ou 9*b,* possède un logiciel spécifique (ou application) délivré par le fournisseur du service, en l'occurrence le logiciel "PE", 900*a* ou 900*b,* et personnalisé avec un profil d'abonné particulier "PA", 903*a* ou 903*b.*

Comme il a été indiqué, outre l'identifiant de base de l'abonné ("UserID"), le profil d'abonné "PA", 103*a* ou 103*b,* comprend un ensemble d'informations qui sont fournies au serveur d'annuaire "SA" 91 lors de l'enregistrement de l'abonné, et par exemple :

- l'adresse du "Serveur d'Annuaire" ("SA") ;
- les abonnés (identifiés par leurs "UserID") avec lesquels l'utilisateur accepte d'entrer en communication ou auxquels il désire notifier sa localisation dans le réseau ; et
- les informations qu'il accepte de rendre publiques sur le serveur d'annuaire (par exemple : nom, nationalité, contacts recherchés, etc.).;

Pour joindre un correspondant à travers le réseau Internet *RI,* ce correspondant étant dûment enregistré, il est nécessaire de connaître son adresse "IP". Cette information est obtenue à l'aide du serveur d'annuaire "SA" 91 et du protocole de localisation "PL", 901*a* ou 901*b,* respectivement.

On doit noter que le profil d'abonné "PA" est, par nature, spécifique à l'abonné, mais peut dépendre aussi des caractéristiques du serveur d'annuaire "SA", notamment du type et de la nature des informations qui doivent lui être fournies ou qu'il peut accepter.

On doit noter enfin que le protocole "PL", 901*a* ou 901*b,* est, comme le protocole "PE", 900*a* ou 900*b,* de type dit propriétaire, puisqu'il adresse un serveur d'annuaire "SA" 91 *a priori* non standardisé ou ne répondant pas à des normes universellement reconnues. Les protocoles "PE" et "PL" des terminaux doivent être compatibles avec les protocoles correspondants implantés dans le serveur d'annuaires "SA" 91, référencés 910 et 911, respectivement.

Ces deux caractéristiques constituent des inconvénients supplémentaires.

En résumé de ce qui vient d'être rappelé, pour qu'un abonné appelant *Aa* puisse localiser un abonné appelé *Ab* et puisse être localisé par celui-ci, il est nécessaire que le terminal qu'il utilise, par exemple 9a, stocke des logiciels spécifiques, 900*a* ou *b,* 901*a* ou *b*, permettant de mettre en oeuvre les protocoles "PE" et "PL". Il peut également être nécessaire qu'il stocke des données afférentes à son profil d'abonné "PA" 903*a*. Cette remarque s'applique de façon similaire aux terminaux des autres abonnés, par exemple le terminal 9*b*.

En d'autres termes, le terminal, 9*a* ou 9*b*, utilisé par un abonné quelconque, *Aa* ou *Ab,* est également spécifique, en ce sens que, si cet abonné désire changer de terminal, il doit retrouver, sur le nouveau terminal utilisé, au moins le ou lés logiciels associés au protocole "PL", en admettant qu'il ait procédé à une phase préliminaire d'enregistrement sur le premier terminal, en faisant appel au protocole "PE" et en fournissant son profil "PA" au serveur d'annuaire "SA". En effet, la présence du protocole "PL" est nécessaire pour adresser le serveur d'annuaire "SA" 91 et avoir accès aux données enregistrées dans celui-ci, notamment les adresses "IP" des correspondants recherchés et leurs profils "PA".

Les terminaux, 9*a* ou 9*b*, doivent également être munis chacun de deux logiciels supplémentaires, également de type propriétaire : le protocole de signalisation "PSP, 902*a* ou 902*b*, et le protocole d'échange de données "RTP" précité (ou un protocole similaire), 905*a* ou 905*b*. Les modules associés au protocole "PSP" correspondent entre eux par l'intermédiaire du canal de signalisation *CS,* au travers du réseau Internet *RI.* De même, les modules associés au protocole "RTP" correspondent entre eux par l'intermédiaire du canal de données *CD,* au travers du réseau Internet *RI.*

Enfin, si les communications téléphoniques doivent sortir du réseau Internet *RI,* vers le réseau standard commuté 93, il est nécessaire de prévoir le protocole de gestion d'appel "CCP" précité (ou un protocole similaire), 904*a* ou 904*b*, également de type propriétaire. Il est également nécessaire de prévoir une ou plusieurs passerelles du type "ITG" précité, représentées sous la référence unique 92, entre le module 904a, associé au protocole "CCP", et le réseau "RTC" 92. Un poste téléphonique d'abonné 95 communique avec le réseau "RTC" via un central "PBX" classique 94, ou tout système similaire. Les communications entre la passerelle "ITG" 92 et le terminal d'abonné, 9a dans l'exemple illustré sur la figure 1, mettent en oeuvre une connexion de type "TCP". Les communications sur la partie "réseau téléphonique commuté" s'effectuent de façon classique et il est inutile de les décrire plus avant.

Le document WO 98/57474 (GEMPLUS CARD INT; 1998-08-28) divulgue une méthode selon le préambule de la revendication 1.

Il serait donc intéressant d'utiliser des terminaux banalisés pour effectuer les phases d'enregistrement et, surtout, les phases de localisation d'abonnés sur le réseau Internet *RI,* de signalisation (appel de l'abonné localisé, etc.) et d'échange de données, ce qui permettrait d'accéder de façon commode au concept appelé "nomadisme".

Il serait également intéressant de pouvoir mettre en oeuvre, lors de la phase de signalisation, une procédure de simple ou mutuelle authentification sûre, entre l'appelé et l'appelant. Diverses négociations, telles que la négociation de clés de chiffrage ou d'opérations dites de "réservation" de chemins de routage devraient également pouvoir être effectuées lors de cette phase de signalisation. De même, lors de la phase d'échange de données, il serait intéressant de pouvoir assurer un chiffrement/déchiffrement robuste des informations, par exemple basé sur les clés de chiffrement précédemment négociées. Enfin, il serait intéressant de pouvoir mettre en oeuvre une tarification, basée sur la quantité (débit) de données échangées et/ou sur la qualité des chemins de routage mis à disposition, ces chemins ayant été négociés, par exemple, dans la phase précédente de signalisation.

Les logiciels associés aux protocoles précités, "PE" et "PL", ne nécessitent pas habituellement de disposer d'une grande quantité de mémoire. Il en est de même des données de profil "PA". On pourrait donc penser les enregistrer, en tout ou partie, dans les circuits de mémoire d'une carte à puce, ce que permet la technologie actuelle.

Cependant, on se heurte à une double difficulté technique, comme il va l'être montré ci-après, ce qui interdit toute communication directe entre le réseau Internet *RI* et une carte à puce.

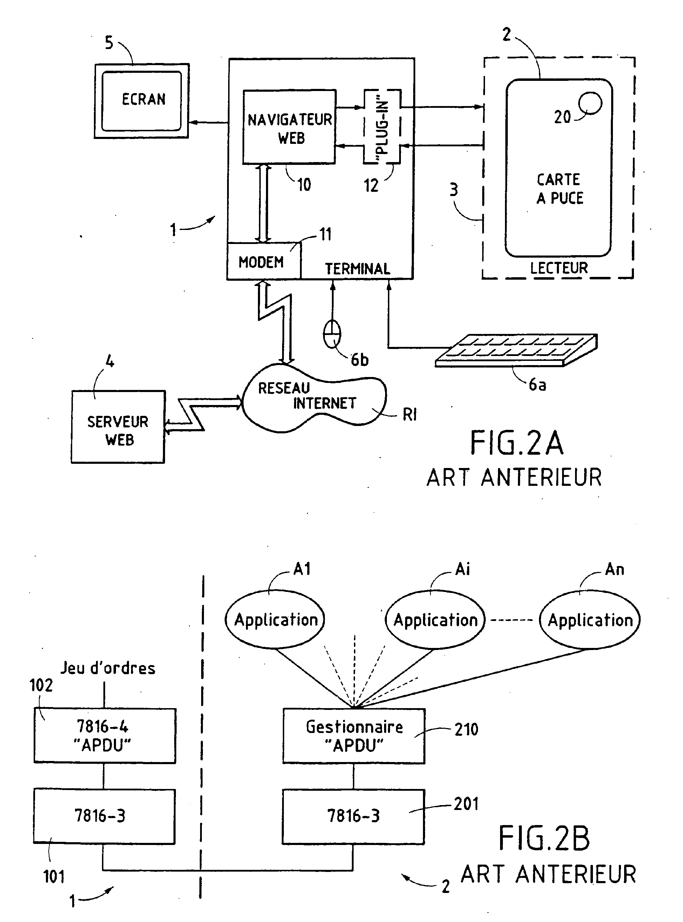

On va tout d'abord rappeler brièvement l'architecture générale d'un système d'application à base de carte à puce, relié à un réseau Internet, par référence aux figures 2A et 2B.

Un système d'application à base de carte à puce comporte généralement les éléments principaux suivants :

- une carte à puce ;
- un système hôte constituant le terminal précité ;
- un réseau de communication, à savoir le réseau internet dans l'application préférée ;
- et un serveur d'application connecté au réseau internet.

La figure 2A illustre schématiquement un exemple d'architecture de ce type. Le terminal 1, par exemple un ordinateur individuel, comporte un lecteur 3 de carte à puce 2. Ce lecteur 3 peut être ou non physiquement intégré dans le terminal 1. Dans le cadre de l'invention, le terminal 1 joue le rôle des terminaux 9a ou 9*b* du système de la figure 1. La carte à puce 2 comporte un circuit intégré 20 dont des connexions d'entrées-sorties affleurent en surface de son support pour autoriser une alimentation en énergie électrique et des communications avec le terminal 1. Ce dernier comprend des circuits d'accès 11 au réseau Internet *RI.* Ces circuits peuvent être constitués par un modem pour se connecter à une ligne téléphonique commutée ou à une voie de communication à plus haut débit : réseau numérique à intégration de services ("RNIS"), câble ou liaisons par satellite, etc. Les circuits 11 permettent de se connecter au réseau Internet *RI,* directement ou via un prestataire de services Internet ("Internet Service Provider" ou "ISP", selon la terminologie anglo-saxonne). On peut également avoir recours à un système intermédiaire tel qu'un "proxy" ou un système d'isolation dit "firewall" ("pare-feu" ou encore appelé "garde barrière").

Le terminal 1 comprend naturellement tous les circuits et organes nécessaires à son bon fonctionnement, et qui n'ont pas été représentés dans un but de simplification du dessin : unité centrale, mémoires vive et fixe, mémoire de masse à disque magnétique, lecteur de disquette et/ou de CédéRom, etc.

Habituellement, le terminal 1 est aussi relié à des périphériques classiques, intégrés ou non, tels un écran de visualisation 5, un clavier 6*a* et une souris 6*b*, etc.

Le terminal 1 peut être mis en communication avec des serveurs ou tous systèmes informatiques connectés au réseau *RI,* dont un seul, 4, est illustré sur la figure 2A. Dans le cadre de l'invention, le serveur 4 est constitué par un serveur d'annuaire 91 (figure 1) et le terminal 1 par l'un des systèmes, 9*a* ou 9*b*, associé à un abonné, *Aa* ou *Ab*. Les circuits d'accès 11 mettent le terminal 1 en communication avec les serveurs 4 grâce à un logiciel particulier 10, appelé navigateur "WEB", ou "browser" selon la terminologie anglo-saxonne. Celui-ci permet d'accéder à diverses applications ou fichiers de données répartis sur l'ensemble du réseau *RI,* généralement selon un mode "client-serveur".

Le protocole de communication sur le réseau Internet *RI* est choisi en fonction de l'application plus particulièrement visée : interrogation de pages "WEB", transferts de fichiers, courrier électronique (e-mel), forums ou "news", etc.

L'architecture logique du système comprenant un terminal, un lecteur de carte à puce et une carte à puce, est représentée schématiquement par la figure 2B. Elle est décrite par la norme ISO 7816, qui elle-même comportent plusieurs sous-ensembles :

- ISO 7816-1 et 7816-2, en ce qui concerne les dimensions et le marquage des cartes ;
- ISO 7816-3, en ce qui concerne le transfert de données entre le terminal et la carte à puce ; et
- ISO 7816-4, en ce qui concerne la structure du jeu d'ordres et le format des commandes.

Sur la figure 2B, du côté terminal 1, on n'a représenté que les couches répondant à la norme ISO 7816-3, référencées 101, et un gestionnaire d'ordres "APDU" (norme ISO 7816-4), référencé 102. Du côté carte à puce 2, les couches répondant à la norme ISO 7816-3 sont référencées 200 et le gestionnaire d'ordres "ADPU" (norme ISO 7816-4) est référencé 201. Les applications sont référencées $A_1$, ..., $A_i$, ..., $A_n$ ; $n$ étant le nombre maximum d'applications présentes sur la carte à puce 2.

Une application, $A_i$, présente dans la carte à puce 2, dialogue avec le terminal 1 au moyen d'un jeu d'ordres. Ce jeu présente typiquement des ordres d'écriture et des ordres de lecture. Le format des ordres est connu sous l'abréviation anglo-saxonne de "APDU" (pour "Application Protocol Data Unit"). Il est défini par la norme ISO 7816-4 précitée. Une "APDU" dé commande est notée *"APDU.command"* et une "APPU" de réponse est notée *"APDU.response".* Les "APDU" sont échangées entre le lecteur de carte et la carte à puce au moyen d'un protocole spécifié par la norme ISO 7816-3 précitée (par exemple en mode caractère : T=0 ; ou en mode bloc : T=1).

Lorsque la carte à puce 2 inclut plusieurs applications distinctes, comme illustré sur la figure 2B, on parle de carte multi-applicative. Cependant, le terminal 1 ne dialogue qu'avec une seule application à la fois.

La sélection d'une application particulière $A_i$ est obtenue à l'aide d'une "APDU" du type sélection ("SELECT"). Une fois ce choix effectué, les "APDU" qui le suivent sont acheminés vers cette application. Une "APDU SELECT" nouvelle a pour effet d'abandonner l'application en cours et d'en choisir une autre. Le sous-ensemble logiciel gestionnaire des "APDU" 201 permet de choisir une application particulière $A_i$ dans la carte à puce 2, de mémoriser l'application ainsi choisie, et de transmettre et/ou recevoir des "APDU" vers et depuis cette application.

En résumé de ce qui vient d'être décrit, la sélection d'une application $A_i$ et le dialogue avec celle-ci s'effectuent par échanges d'ordres "APDU". On suppose que les applications $A_i$ sont des applications conventionnelles, que l'on appellera ci-après "GCA" (pour "Generic Card Application" ou application de carte générique).

Ces rappels étant effectués, il est à noter que la carte à puce 2 ne peut communiquer directement avec les navigateurs standards du commerce 10, sauf à modifier le code de ces derniers.

En outre, et surtout, les cartes à puce actuelles, qui par ailleurs sont conformes aux standards et normes rappelées ci-dessus, ont une configuration matérielle et logicielle qui ne permet pas non plus de communiquer directement avec le réseau Internet *RI*. En particulier, elles ne peuvent recevoir et transmettre des paquets de données, selon l'un ou l'autre des protocoles utilisés sur ce type de réseau. Il est donc nécessaire de prévoir une pièce de logiciel additionnelle, implantée dans le terminal 1, généralement sous la forme de ce qui est appelé un "plug-in", selon la terminologie anglo-saxonne. Cette pièce de logiciel, qui porte la référence 12 sur la figure 2A, effectue l'interface entre le navigateur 10 et la carte 2, plus précisément les circuits électroniques 20 de cette carte 2.

L'invention vise à pallier les inconvénients des procédés et dispositifs de l'art connu, et dont certains viennent d'être rappelés, tout en répondant aux besoins qui se font sentir.

Selon l'invention, les applications nécessaires à la mise en oeuvre des protocoles d'enregistrement "PE" et de localisation "PL", ainsi que les données caractérisant le profil d'abonné "PA", sont des fichiers qui sont de préférence stockés, en tout ou partie, dans des mémoires d'une carte à puce, les fichiers de type exécutable étant des applications standards du type "GCA" précité.

Selon l'invention, la carte à puce se comporte comme un serveur/client de type "WEB" pour le terminal qui lui est associé.

Pour ce faire, on prévoit une couche de logiciel de communication spécifique dans la carte à puce et son pendant dans le terminal. Le terme "spécifique" doit être entendu comme spécifique au procédé de l'invention. En effet, ces couches de communication, dites spécifiques, sont banalisées quelle que soit l'application considérée. En particulier, elles sont indépendantes des applications nécessaires à la mise en oeuvre des différents protocoles précités. Elles n'interviennent que dans le processus d'échanges de données bidirectionnels entre la carte à puce et le terminal, d'une part, et la carte à puce et le réseau, d'autre part.

Les couches logicielles de communication spécifiques comprennent notamment des composants logiciels, dits "agents intelligents", permettant en particulier des conversions de protocoles. Les agents intelligents seront appelés ci-après plus simplement "agents". Il existe des agents appareillés dans les couches de communication spécifiques respectives associées au terminal et à la carte à puce. Selon le procédé de l'invention, il s'établit des sessions entre agents appareillés.

On notera que le procédé de l'invention rend possible l'activation d'applications de type conventionnel, c'est-à-dire du type "GCA" précité, localisées dans une carte à puce, sans devoir les modifier en quoi que ce soit.

Pour ce faire, on prévoit un ou plusieurs agents intelligents particuliers dits traducteurs de script, qui reçoivent des requêtes d'un navigateur et les traduisent en ordres "APDU" compréhensibles par l'application de type "GCA". De ce fait, on implante dans la carte à puce une fonction similaire à celle connue par ailleurs sous la dénomination "CGI" dans les serveurs "WEB" classiques. Cette fonction permet de mettre en oeuvre une application dans la carte à puce par un protocole Internet de type "HTTP".

Ces diverses dispositions permettent à la carte à puce, et plus précisément aux applications présentes dans celle-ci, de communiquer directement avec un serveur éloigné connecté au réseau Internet par la mise en oeuvre de protocoles de type Internet. La fonctionnalité "CGI" offerte par la carte à puce permet pour sa part l'accession aux applications associées aux protocoles d'enregistrement "PE" et de localisation "PL" et leur exécution, sans nécessiter la présence d'applications de type propriétaire dans le terminal. Seul un navigateur, avantageusement de type standard du commerce, est nécessaire.

Selon une caractéristique avantageuse de l'invention, on implante dans la carte à puce une application particulière, que l'on appellera "filtre" dans ce qui suit. Il s'agit d'une entité logicielle qui joue un rôle analogue à celui d'un "proxy". Pour ce faire, on fait appel aux dispositions précitées mettant en oeuvre des agents.

Cette disposition permet à la carte à puce de se comporter comme un "proxy" (de type "TCP") de protocole de signalisation et/ou un "proxy" (de type "UDP") de protocole d'échange de données.

L'intérêt d'un proxy de signalisation est de pouvoir mettre en oeuvre une procédure de simple ou mutuelle authentification entre l'appelant et l'appelé qui peut être utile par exemple pour l'acceptation des communications. Il permet également la négociation de clés de chiffrage. Il permet aussi de négocier *a priori* un chemin de routage optimisé, par exemple en garantissant une qualité de transmission donnée ou une bande passante élevée.

L'intérêt principal d'un proxy d'échange de données est de pouvoir mettre en oeuvre une procédure robuste de chiffrement/déchiffrement des informations. Un proxy permet également de mettre en oeuvre une procédure de tarification, basée par exemple sur le débit ou sur le type de chemin précédemment négocié.

Ces caractéristiques répondent donc bien à des besoins qui se font sentir et qui ont été précédemment évoqués.

L'invention a donc pour objet principal un procédé de gestion de transmissions de données multimédias via un réseau de type Internet entre un premier système d'abonné et un second système d'abonné comprenant au moins une phase d'échange de données dites de signalisation, via un canal dit de signalisation, à l'aide d'un protocole de signalisation déterminé, et une phase d'échange desdites données multimédias, via un canal dit de données, à l'aide d'un protocole de communication déterminé, caractérisé en ce que, au moins ledit premier système d'abonné comportant un terminal muni d'un navigateur de type "WEB" et d'un lecteur de carte à puce coopérant avec une carte à puce, ladite carte à puce comportant une première pièce de logiciel, formant une couche protocolaire de communication spécifique et ledit terminal comportant une seconde pièce de logiciel, formant une couche protocolaire de communication spécifique et formant interface avec au moins ledit navigateur de type "WEB" ; lesdites première et seconde pièces de logiciel comprennent chacune en outre au moins une première entité logicielle autonome, de type dit client, et une deuxième entité logicielle autonome, de type dit serveur, lesdites entités coopérant de manière à permettre l'établissement de sessions d'échanges de données bidirectionnels entre ledit terminal et ladite carte à puce et à ce que ladite carte à puce offre la fonctionnalité d'un client/serveur de type "WEB", et à permettre l'établissement d'une session d'échanges de données bidirectionnels entre le terminal dudit premier système d'abonné et ledit second système d'abonné via ledit réseau de type Internet, lesdites unités logicielles autonomes communiquant au moyen d'unités de données de protocole prédéterminées ;

- en ce qu'il comprend la réalisation, dans ladite carte à puce, d'une pièce de logiciel applicative de caractéristiques fonctionnelles déterminées, dite filtre, recevant et/ou émettant des unités de données de protocole vers lesdites et/ou à partir desdites première et deuxième entités logicielles autonomes, de types respectifs client et serveur, comprises dans ladite seconde pièce de logiciel spécifique ; la réalisation de ladite pièce applicative étant sous le contrôle de ladite entité logicielle autonome de type serveur ; et
- en ce que ledit filtre coopère avec lesdites entités logicielles autonomes de ladite seconde pièce de logiciel spécifique pour ouvrir une session avec lesdites entités logicielles autonomes de ladite première pièce de logiciel spécifique pour former une fonction dite de "proxy " et contrôler des caractéristiques prédéterminées des échanges de données transitant entre ledit premier système d'abonné et ledit second système d'abonné, via au moins l'un desdits canaux de signalisation et/ou de données, pendant lesdites phases d'échanges de données de signalisation et/ou de données multimédias.

L'invention a encore pour objet une carte à puce pour la mise en oeuvre de ce procédé.

Un mode préféré, mais non limitatif, de réalisation de l'invention va maintenant être décrit de façon plus détaillée en se référant aux dessins annexés, parmi lesquels :

- la figure 1 illustre schématiquement les modules principaux composant un logiciel de téléphonie selon l'art connu ;
- les figures 2A et 2B illustrent les architectures matérielle et logique, respectivement, d'un exemple de système d'application à base de carte à puce connecté à un réseau Internet selon l'art connu;
- la figure 3 illustre schématiquement un exemple de système d'application à base de carte à puce selon l'invention, cette dernière agissant en tant que client/serveur "WEB", selon un aspect de l'invention ;
- la figure 4 est un diagramme d'états d'une session entre des entités logicielles dites agents intelligents, selon un aspect de l'invention ;
- la figure 5 illustre de façon simplifiée l'architecture logique d'un système selon l'invention dans lequel la carte à puce comprend des agents intelligents ;
- la figure 6 illustre de façon simplifiée l'architecture logique d'un système selon un autre aspect de l'invention selon lequel la carte à puce comprend des agents intelligents traducteurs de scripts, de manière à implanter une fonction dite "CGI" ;
- la figure 7A illustre schématiquement une première étape de la phase d'enregistrement d'un abonné sur un serveur d'annuaire ;
- les figures 7B et 7C illustrent des exemples de formulaires "HTLM" utilisables pour cette phase d'enregistrement ;
- la figure 7D illustre schématiquement les principales étapes de la phase d'enregistrement d'un abonné sur un serveur d'annuaire ;
- la figure 8 illustre schématiquement les principales étapes de la phase de localisation d'un abonné sur le réseau Internet par interrogation d'un serveur d'annuaire ;
- la figure 9 illustre schématiquement un "proxy" selon l'art connu;
- la figure 10 illustre de façon simplifiée l'architecture logique d'un système selon l'invention conforme à celui de la figure 4, dans lequel un filtre dit "proxy" est réalisé sur la carte à puce ;
- La figure 11A illustre schématiquement l'architecture d'un système de téléphonie selon l'invention mettant en oeuvre la fonctionnalité "proxy" pour le canal de signalisation, du côté abonné appelant et du côté abonné appelé ;
- La figure 11 B illustre schématiquement l'architecture d'un système de téléphonie selon l'invention mettant en oeuvre la fonctionnalité "proxy" pour le canal de données, du côté abonné appelant et du côté abonné appelé ; et
- La figure 12 illustre schématiquement l'architecture générale d'un système de gestion de transmission de données téléphoniques, selon un mode de réalisation préféré de l'invention, entre un système appelant comprenant un terminal et une carte à puce, et un système appelé.

Dans ce qui suit, sans en limiter en quoi que ce soit la portée, on se placera ci-après dans le cadre de l'application préférée de l'invention, sauf mention contraire, c'est-à-dire dans le cas de transmissions téléphoniques via le réseau Internet.

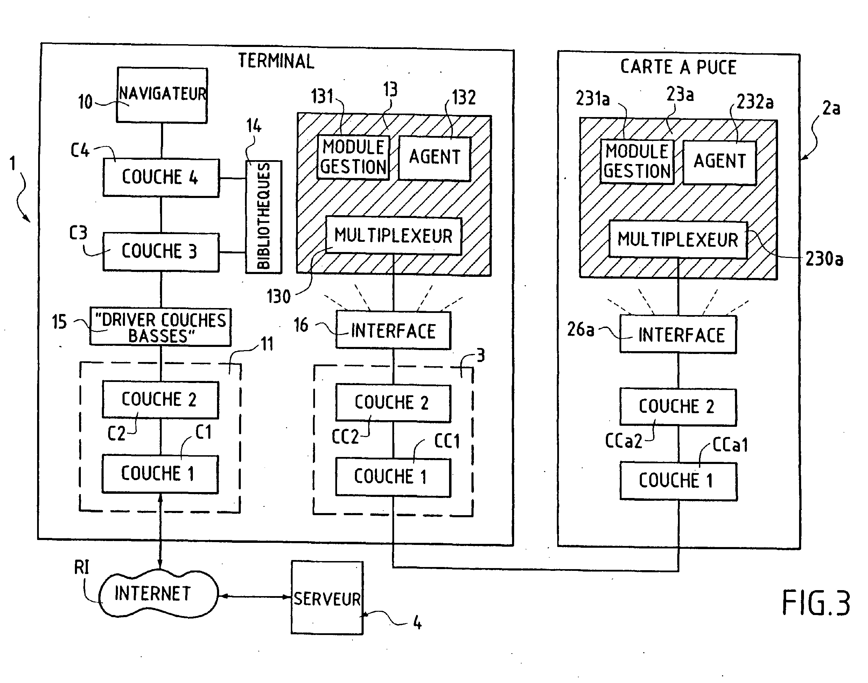

La figure 3 illustre schématiquement un exemple de système d'application à base de carte à puce selon un premier aspect de l'invention, permettant à cette dernière d'agir en tant que client/serveur "WEB.

A l'exception de couches logicielles de protocole de communication spécifiques, référencées 13 et 23a, respectivement implantées dans le terminal 1 et la carte à puce 2a, les autres éléments, matériels ou logiciels, sont communs à l'art connu, notamment à ce qui a été décrit en regard des figures 2A et 2B, et il n'y a pas lieu de les re-décrire de façon détaillée.

Le terminal 1 comprend des circuits 11 d'accès au réseau *RI,* constitués par exemple d'un modem. Ces circuits regroupent les couches logicielles inférieures, $C_1$ et $C_2$, qui correspondent aux couches "physique" et de "lien de données".

On a également représenté les couches supérieures, $C_3$ et $C_4$, qui correspondent aux couches "d'adressage de réseau" ("IP", dans le cas d'Internet) et de "transport" ("TCP"). La couche supérieure d'application ("HTTP", "FTP", "e-mail", etc.) n'a pas été représentée.

L'interface entre les couches inférieures, $C_1$ et $C_2$, et les couches supérieures, $C_3$ et $C_4$, est constituée par une couche logicielle généralement appelée "driver couches basses". Les couches supérieures, $C_3$ et $C_4$, s'appuient sur cette interface et sont mises en oeuvre par l'intermédiaire de bibliothèques de fonctions spécifiques ou bibliothèques réseau 14, avec lesquelles elles correspondent. Dans le cas du réseau Internet, "TCP/IP" est mis en oeuvre au moyen de bibliothèques dites de "sockets".

Cette organisation permet à un navigateur 10 de poser des requêtes vers un serveur 4, pour la consultation de pages "WEB" (protocole "HTTP"), pour le transfert de fichiers (protocole "FTP") ou l'envoi de courrier électronique (protocole "e-mail"), ce de façon tout à fait classique en soi.

Le terminal 1 comprend également un lecteur de carte 3, intégré ou non. Pour communiquer avec la carte à puce 2a, le lecteur de carte 30 englobe également deux couches basses, $CC_1$ (couche physique) et $CC_2$ (couche de lien de données), jouant un rôle similaire aux couches $C_1$ et $C_2$. Les interfaces logicielles avec les couches $CC_1$ et $CC_2$ sont décrites, par exemple, par la spécification "PC/SC" ("part 6, service provider"). Les couches elles-mêmes, $CC_1$ et $CC_2$, sont notamment décrites par les normes ISO 7816-1 à 7816-4, comme il a été rappelé.

Une couche logicielle supplémentaire 16 forme interface entre les couches applicatives (non représentées) et les couches inférieures, $CC_1$ et $CC_2$. La fonction principale dévolue à cette couche 16 est une fonction de multiplexage/démultiplexage.

Les communications avec la carte à puce 2a s'effectuent selon un paradigme similaire à celui utilisé pour la manipulation de fichiers dans un système d'exploitation du type "UNIX" (marque déposée) : OUVRIR ("OPEN"), LIRE ("READ"), ECRIRE ("WRITE"), FERMER ("CLOSE"), etc.

Du côté de la carte à puce 2a, on retrouve une organisation similaire, à savoir la présence de deux couches basses, référencées $CCa_1$ (couche physique) et $CCa_2$ (couche de lien de données), ainsi qu'une couche d'interface 26a, tout à fait similaire à la couche 16.

Selon l'invention, on prévoit, de part et d'autre, c'est-à-dire dans le terminal 1 et dans la carte à puce 2a, deux couches de protocoles spécifiques : 13 et 23a, respectivement.

Dans le terminal 1, la couche spécifique 13 s'interface aux "drivers couches basses" 15, aux bibliothèques 14 des couches réseau, $C_3$ et $C_4$, et aux couches protocolaires du lecteur de carte 3, c'est-à-dire les couches inférieures, $CC_1$ et $CC_2$, via la couche de multiplexage 16. La couche spécifique 13 permet le transfert de paquets réseaux de et vers la carte à puce 2a. En outre, elle adapte les applications existantes telles le navigateur Internet 10, le courrier électronique, etc., pour des utilisations mettant en oeuvre la carte à puce 2a.

Du côté de la carte à puce 2a, on retrouve une organisation tout à fait similaire constituée par une instance supplémentaire de la couche spécifique, référencée 23a, pendant de la couche 13.

De façon plus précise, les couches spécifiques, 13 et 23a, sont subdivisées en trois éléments logiciels principaux :

- un module, 130 ou 230a, de transfert de blocs d'informations entre les couches 13 et 23a, via les couches conventionnelles $CC_1$, $CC_2$, $CCa_1$ et $CCa_2$ ;
- une ou plusieurs pièces de logiciel, dites "agents intelligents", 132 ou 232a, qui réalisent, par exemple, des fonctions de conversion de protocoles ;
- et un module de gestion de la configuration spécifique, 131 et 231a, respectivement ; module qui peut être assimilé à un agent intelligent particulier.

Pour simplifier, on appellera ci-après les agents intelligents, "agents", comme il a été précédemment indiqué.

On retrouve donc, dans le terminal 1 et la carte à puce 2a, une pile protocolaire de communication entre les deux entités.

Les couches de niveau deux (couches de lien de données), $CC_2$ et $CCa_2$, assurent l'échange entre la carte à puce 2a et le terminal 1. Ces couches sont responsables de la détection et l'éventuelle correction d'erreurs de transmission. Différents protocoles sont utilisables, et à titre d'exemples non exhaustifs les suivants :

- la recommandation ETSI GSM 11.11 ;
- le protocole défini par la norme ISO 7816-3, en mode caractère T=0;
- le protocole défini par la norme ISO 7816-3, en mode bloc T=1
- ou le protocole défini par la norme ISO 3309, en mode trame "HDLC" (pour "High-Level Data Link Control procedure" ou procédure de commande de liaison à haut niveau).

Dans le cadre de l'invention, on utilisera de préférence le protocole ISO 7816-3, en mode bloc.

De façon connue en soi, à chaque couche de protocole, il est associé un certain nombre de primitives qui permettent les échanges de données entre couches de même niveau et d'une couche à l'autre. A titre d'exemple, les primitives associées à la couche de niveau deux sont du type "demande de données" (*"Data.request"*) et "envoi de données" par la carte (*"Data.response"*), ainsi que "confirmation de données" (*"Data.confirm"*), etc.

De façon plus spécifique, les couches 13 et 23a sont chargées du dialogue entre la carte à puce 2*a* et l'hôte; c'est-à-dire le terminal 1. Ces couches permettent l'échange d'informations entre un utilisateur (non représenté) du terminal 1 et la carte à puce 2*a*, par exemple via des menus déroulants sous la forme d'hypertexte au format "HTML". Elles permettent aussi la mise en place d'une configuration adaptée pour l'émission et/ou la réception de paquets de données.

Comme il a été indiqué ci-dessus, les couches comprennent trois entités distinctes.

La première couche, 130 ou 230*a*, est essentiellement constituée par un multiplexeur logiciel. Elle permet l'échange d'informations entre la carte à puce 2*a* et le terminal hôte 1, sous la forme d'unités de données de protocole. Elle joue un rôle similaire à celui d'un commutateur de paquets de données. Ces unités sont émises ou reçues via la couche de niveau deux (couche de liens de données). Ce protocole particulier de communication permet de mettre en communications au moins une paire d'agents. Le premier agent de chaque paire, 132, est situé dans la couche 13, côté terminal 1, le second, 232*a*, est situé dans la couche 23*a*, côté carte à puce 2*a*. Une liaison entre deux "agents" est associée à une session, que l'on pourra appeler *"S-Agent"*. Une session est un échange de données bidirectionnel entre ces deux agents. Si l'une ou l'autre des couches, 13 et 23a, comporte plusieurs agents, les agents d'une même couche peuvent aussi établir de sessions entre eux et/ou avec les modules 131 et 231*a*, qui constituent des agents particuliers.

De façon plus précise, un agent est une entité logicielle autonome qui peut réaliser tout ou partie de fonctions des couches de niveau trois et quatre, en fonction de la configuration mise en oeuvre par le terminal 1.

Les agents sont associés à des propriétés ou attributs particuliers. Pour fixer les idées, et à titre d'exemple non limitatif, les six propriétés suivantes sont associées aux agents :

- "hôte" : agent localisé dans le terminal ;
- "carte" : agent localisé dans la carte à puce ;
- "local" : agent ne communiquant pas avec le réseau ;
- "réseau" : agent communiquant avec le réseau (côté terminal) ;
- "client" : agent qui initialise une session ;
- "serveur" : agent qui reçoit une demande de session.

Un agent particulier est identifié par une référence, par exemple un nombre entier de 16 bits (c'est-à-dire compris entre 0 et 65535). Le bit de poids fort ($b15 = 1$) indique si la référence est locale (communications locales à la carte à puce ou au terminal) ou distante ($b15 = 0$).

Il existe deux grandes catégories d'agents : les agents de type "serveur", qui sont identifiés par une référence fixe, et les agents de type "client", qui sont identifiés par une référence variable, que l'on peut qualifier d'éphémère, délivrée par le module de gestion de configuration, 131 ou 231a.

Les agents communiquent entre eux à l'aide d'entité dites "unités de donnée de protocole" ou *"pdu"* (pour "protocol data unit", selon la terminologie anglo-saxonne) constituant une référence de destination et une référence de source. On pourrait également appeler cette *"pdu"* particulière *"SmartTP pdu"*, en référence au terme anglais "Smart Card" (carte à puce) couramment utilisé. Les *"pdu"* utilisent notamment les références définies ci-dessus.

Une *"SmartTP pdu"*, ou plus simplement *"pdu"* ci-après, comporte une référence source, une référence de destination, un ensemble de bits constituant des drapeaux ou "flags" qui précisent la nature de la *"pdu"*, et des données optionnelles :

- le drapeau *"OPEN"* (ouvert) est positionné pour indiquer l'ouverture d'une session ;
- le drapeau *"CLOSE"* (fermé) indique la fermeture d'une session ; et
- Le drapeau *"BLOCK"* (verrouillé) indique que l'agent est en attente d'une réponse de son correspondant et suspend toute activité.

On appellera jeton une *"pdu"* qui ne comporte pas de données.

L'entité *"SmartTP"* contrôle l'existence de l'agent destinataire et réalise la commutation d'un paquet vers ce dernier.

Une session agent *"S-Agent"* possède trois états remarquables, à savoir :

- un état déconnecté : aucune session n'est ouverte avec un autre agent
- un état connecté : une session est ouverte avec un autre agent, une session *"S-Agent"* étant identifiée par une paire de références ; et

- un état bloqué, l'agent étant connecté et attendant une réponse de son correspondant.

Le mécanisme d'établissement d'une session *"S-Agent"* est le suivant :

- une nouvelle instance d'un agent client est créée (côté carte à puce ou terminal), cet agent étant identifié par une référence éphémère pseudo-unique ;
- l'agent client émet une *"pdu"* à destination d'un agent serveur (dont la référence est connue par ailleurs) avec le drapeau *"OPEN"* positionné et l'agent client passe à l'état connecté ou bloqué selon la valeur du drapeau *"BLOCK"* ; et
- l'agent serveur reçoit la *"pdu"* avec le drapeau *"OPEN"* et passe à l'état connecté

Une fois une session ouverte, deux agents échangent des données via des *"pdu"*.
Le mécanisme de fermeture d'une session est le suivant :

- un agent émet une *"pdu"* avec le drapeau *"CLOSE"* positionné (et qui comporte éventuellement des données ; et
- l'autre agent reçoit une *"pdu"* avec le drapeau *"CLOSE"* positionné (et qui comporte éventuellement des données) et la session *"S-Agent"* passe à l'état déconnecté.

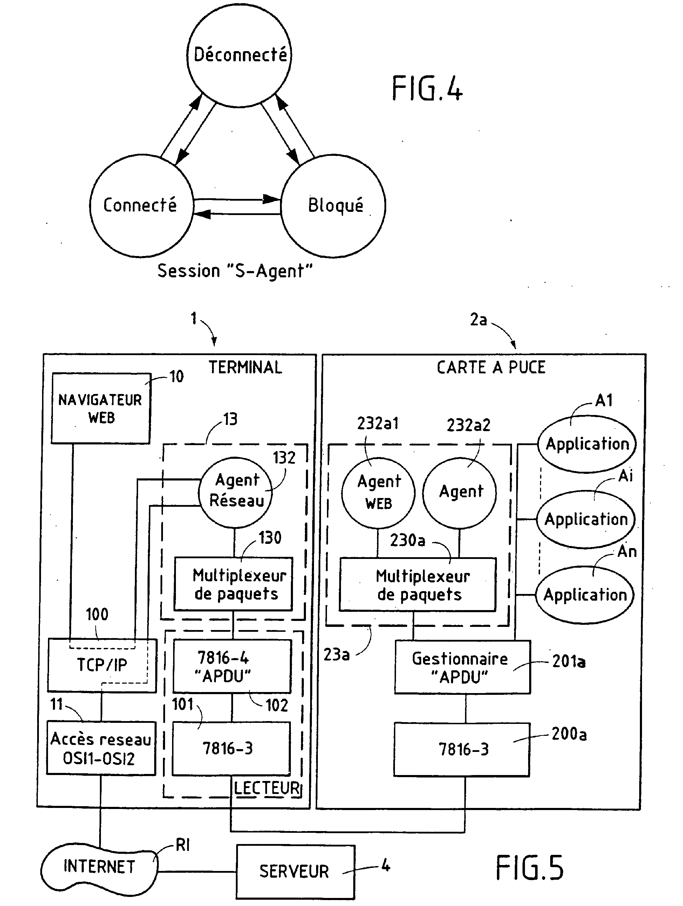

La figure 4 illustre de façon schématique le diagramme d'états des sessions *"S-Agent",* telles qu'elles viennent d'être rappelées.
Les couches 130 et 230*a* gèrent des tables (non représentées) qui contiennent la liste des agents présents, côté terminal hôte 1 et carte à puce 2*a*.
De façon pratique, les agents permettent d'échanger des données (de l'hypertexte, par exemple), mais également de déclencher des transactions réseau, autorisant des communications entre la carte à puce 2*a* et un serveur éloigné 4 (figure 3).
Les modules de gestion de configuration, 131 et 231*a*, respectivement, sont assimilables à des agents particuliers. Par exemple, le module 131, côté terminal hôte 1, gère notamment des informations relatives à la configuration de ce terminal (modes de fonctionnement), liste des autres agents présents, etc. Le module 231*a*, côté carte à puce 2*a*, a des fonctions analogues. Ces deux agents peuvent être mis en communication l'un avec l'autre pour établir une session.
De façon pratique, la carte à puce 2*a* est avantageusement "adressée" par utilisation d'une adresse "URL" (pour "Universal Resource Locator") définissant un rebouclage sur le terminal 1 lui-même, et non un pointage sur un serveur externe. A titre d'exemple, la structure de cette "URL" est habituellement la suivante :

$$\text{http://127.0.0.1:8080 (1),}$$

dans laquelle 127.0.0.1 est l'adresse "IP" de rebouclage et 8080 est le numéro de port.

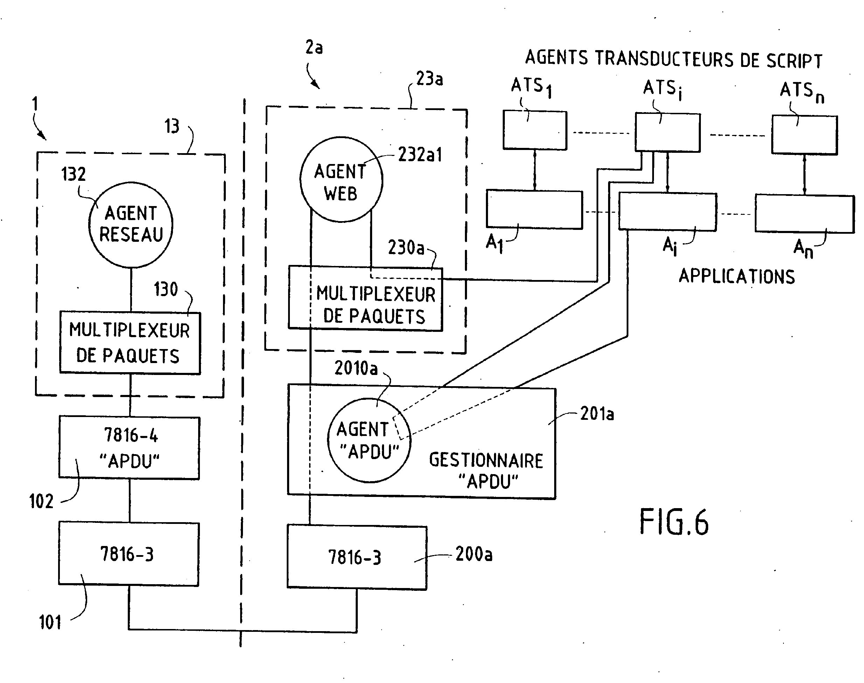

La figure 5 illustre de façon simplifiée l'architecture logique d'un système selon l'invention du type représenté sur la figure 3, mais décrite de façon plus détaillée. La carte à puce 2*a* comprend plusieurs agents, dont deux seulement ont été représentés : un agent de type non précisément défini $232a_1$ et un agent $232a_2$, de type dit "WEB". La pile logique comprend, les couches de protocole inférieures, référencées 200a, répondant aux normes ISO 7816-3 (figure 2 : $CCa_1$ et $CCa_2$), le gestionnaire de commandes "APDU" $201a_1$, et le multiplexeur de paquets 230*a*, ce dernier étant interfacé aux agents, notamment l'agent "WEB" $231a_2$.
Du côté terminal 1, il existe deux piles, l'une communiquant avec le réseau Internet *RI,* l'autre avec la carte à puce 2*a*. La première pile comprend les organes 11 (figure 2 : $C_1$ et $C_2$) d'accès au réseau (normes OSI 1 et 2) et les couches de protocole "TCP/IP" (figure 3 : $C_3$ et $C_4$), référencées 100. Ces dernières couches sont interfacées avec le navigateur "WEB" 10. L'autre pile comprend les couches de protocole inférieures, référencées 101, répondant aux normes ISO 7816-3 (figure 3 : $C_1$ et $C_2$), le gestionnaire 102 d'ordres "APDU" et le multiplexeur de paquets 130, ce dernier étant interfacé avec des agents, dont un seul 132, est représenté. Ce dernier, que l'on supposera de "type réseau", peut en outre communiquer, d'une part avec le navigateur 10, via les couches "TCP/IP" 101, d'autre part avec le réseau Internet *RI,* via ces mêmes couches "TCP/IP" 101 et l'organe 11, d'accès au réseau *RI.*
Le gestionnaire d'ordres "APDU" 201*a* est également interfacé avec une ou plusieurs couches de niveau applications, que l'on appellera simplement applications. Ces applications, $A_1$, ..., $A_i$, ..., $A_n$, sont, comme il a été indiqué, des applications de type conventionnel.
En résumé, la fonction client/serveur "WEB", fournie par la carte à puce 2a, peut être réalisée par l'association de l'agent "WEB" $232a_1$ dans la carte à puce et de l'agent réseau 132 dans le terminal 1, et par la mise en oeuvre de sessions entre agents, comme il a été décrit.

La carte à puce 2*a* présente donc bien la fonctionnalité client/serveur "WEB". En outre, selon l'invention, n'importe quelle application conventionnelle, $A_1$ à $A_n$, du type "CGA" précité, peut être activée au travers de ce client/serveur "WEB", soit par le navigateur "WEB" 10 présent dans le terminal 1, soit par un navigateur éloigné 4, localisé en un point quelconque du réseau Internet *RI,* par la mise en oeuvre de sessions entre agents. Selon le procédé de l'invention, les applications, $A_1$ à $A_n$, ne nécessitent pas d'être ré-écrites et sont mises en oeuvre telles quelles.

Dans le cadre de l'invention, tout ou partie des applications $A_1$ à $A_n$ peut être constitué par des applications associées à un ou plusieurs des protocoles précités "PE", "PL", etc., et chargé dans une mémoire de la carte à puce 2*a*. Des donnée: représentant un ou plusieurs profils "PA" peuvent également être stockées dans la carte à puce 2*a*.

La fonctionnalité client/serveur "WEB" offerte par la carte à puce 2a n'est pas suffisante pour qu'une application puisse s'exécuter. Il est nécessaire de lui adjoindre une fonctionnalité supplémentaire.

En effet, selon un autre aspect de l'invention, la fonction client/serveur "WEB" offerte par la carte à puce 2*a* inclut un mécanisme similaire à la fonction dite "CGI" (pour "Common Gateway Interface" ou "interface de passerelle") implantée dans les serveurs "WEB" classique.

Avant de décrire un exemple d'architecture conforme à l'invention, permettant de réaliser une fonction de ce type, au sein même d'une carte à puce, il est utile de rappeler les principales caractéristiques d'un mode de fonctionnement "CGI".

Le "CGI" est une spécification de mise en oeuvre, depuis un serveur "WEB", d'applications écrites pour les systèmes d'exploitation "UNIX" (marque déposée), "DOS", ou "WINDOWS" (marque déposée). A titre d'exemple, pour le système d'exploitation "UNIX", la spécification est "CGI 1.1" et pour le système d'exploitation "WINDOWS 95", la spécification est "CGI 1.3".

Toujours à titre d'exemple, une requête "HTTP" pour une adresse "URL", du type:

$$\text{"http://www.host.com/cgi-bin/xxx.cgi"} \qquad (2),$$

dans laquelle "host" se réfère à un système hôte (généralement éloigné), est interprétée par un serveur "WEB" comme l'exécution d'un script de commande, de type "CGI" nommé "xxx" et présent dans le répertoire "cgi-bin" de ce système hôte. Bien que le nom du répertoire puisse être *a priori* quelconque, par convention, c'est le nom donné au répertoire stockant les scripts de type "CGI". Un script est une suite d'instructions du système d'exploitation du système hôte dont le résultat final est transmis au navigateur "WEB" émetteur de la requête précitée. Différents langages peuvent être utilisés pour écrire ce script, par exemple le langage "PERL" (marque déposée).

De façon pratique, la requête est habituellement affichée sur un écran informatique sous la forme d'un formulaire compris dans une page "HTLM". Le langage "HTLM" permet de traduire un formulaire en une adresse "URL". Le formulaire comporte un ou plusieurs champs, obligatoires ou non, qui sont remplis par un utilisateur à l'aide des moyens de saisie habituels : clavier pour le texte, souris pour les cases à cocher ou les boutons dits "radio", etc. Le contenu du formulaire (ainsi qu'éventuellement des informations et instructions dites "cachées") est émis à destination du serveur "WEB". Le code "HTLM" de la page décrit la structure matérielle du formulaire (cadre, graphisme, couleur, et tout autre attribut), ainsi que la structure des champs de données à saisir (nom, longueur, type de données, etc.).

La transmission peut s'effectuer selon deux types de formats principaux. Un premier format utilise la méthode dite "POST" et un second la méthode dite "GET". Une information de type de format est présente dans le code de la page formulaire.

Ce mécanisme n'est cependant pas directement transposable à une carte à puce, même si celle-ci offre la fonctionnalité client/serveur "WEB" conformément à l'une des caractéristiques de l'invention.

On va maintenant décrire un exemple d'architecture permettant d'activer une application quelconque, de type conventionnel, via un serveur "WEB" sur la carte à puce, par référence à la figure 6.

Parmi les agents intelligents, prévus conformément à l'un des aspects de l'invention, on prévoit des agents intelligents particuliers, que l'on appellera ci-après "Agents traducteurs de script" ou de façon abrégée "ATS". Le script est alors interprété par un de ces agents "ATS". Cette traduction peut être réalisée de différentes manières :

a/par l'agent "WEB" 232$a_1$ lui-même, qui est doté dans ce cas d'une double capacité ;
b/par un agent script unique capable de traduire l'ensemble des scripts présents dans la carte à puce 2*a* ;
c/par un agent de script dédié que l'on appellera "ATSD" ci-après (un agent par script) ; ou
d/par un agent "APDU" 2010*a* du gestionnaire d'ordres "APDU" 201 a, qui est doté, dans ce cas, d'une double capacité.

L'agent "APDU" 2010*a* est une composante de la couche gestionnaire d'ordres "APDU" 201*a*. Cette dernière est une couche capable de centraliser tous les ordres "APDU" émis et/ou reçus par le système, de sélectionner des

applications, parmi $A_1$ à $A_n$, mais également d'offrir une interface de type agent intelligent. Elle est donc capable, selon l'une des caractéristiques de l'invention de communiquer avec tous les agents intelligents (via des sessions), que ces agents soient localisés dans le terminal 1 ou la carte à puce 2a.

Dans le cas c/ ci-dessus, une session est ouverte entre l'agent "WEB" $232a_1$ et l'un des agents "ATSD".

La figure 6 illustre un exemple d'architecture pour laquelle les agents traducteurs sont du type "ATSD". Ils sont référencés $ATS_1$ à $ATS_n$ et associés aux applications $A_1$ à $A_n$. L'application sélectionnée étant supposée être l'application $A_i$, la session s'établit entre l'agent "WEB" $232a_1$ et l'agent $ATS_i$.

Un agent traducteur de script génère une suite d'ordres "APDU". Une session est ouverte entre l'agent traducteur, par exemple l'agent $ATS_i$, et l'agent "APDU"$2101a$. Les ordres sont alors émis vers l'agent "APDU"$2101a$. Le gestionnaire d'ordres "APDU" $210a$ sélectionne l'application "CGA" $A_i$ et lui transmet les ordres "APDU", ordres traduits et donc conventionnels, qu'elle est en mesure de comprendre. Cette application est donc correctement activée, sans avoir à la modifier ou à la réécrire.

Les réponses de l'application $A_i$ sont transmises au gestionnaire d'ordres "APDU" $210a$, à l'agent "APDU" $2010a$, puis de nouveau à l'agent $ATS_i$ (et de façon plus générale à l'agent traducteur de script).

Les différents cheminements sont représentés symboliquement sur la figure 6 par des traits pleins reliant les blocs fonctionnels, ou en pointillés à l'intérieur de ces blocs.

Pour effectuer les opérations d'enregistrement d'un abonné sur un ou plusieurs serveurs d'annuaires et/ou la localisation d'abonnés appelés, le procédé selon l'invention utilise les deux caractéristiques qui viennent d'être rappelées, à savoir le fonctionnement de la carte à puce en tant que serveur/client "WEB", incluant une fonction "CGI".

Selon une forme préférée de réalisation de l'invention, les applications associées aux protocoles d'enregistrement d'abonné "PE" et/ou de localisation d'abonné "PL", ainsi qu'éventuellement un ou plusieurs profil(s) d'abonné sont enregistrées dans la carte à puce 2a.

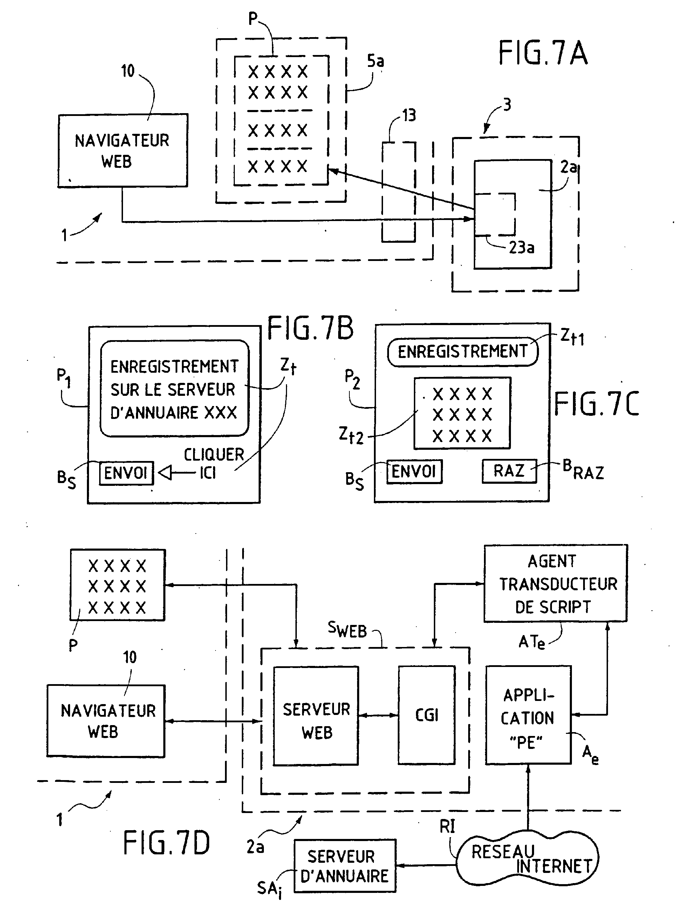

On va maintenant décrire de façon détaillée les différentes phases et étapes du procédé selon l'invention pour l'enregistrement d'un abonné et/ou la localisation d'un abonné appelé, par référence aux figures 7A à 9.

La première phase concerne l'enregistrement d'un profil d'abonné dans un serveur d'annuaire particulier que l'on référencera $SA_i$ ci-après. Cet annuaire est un annuaire conforme à l'art connu (par exemple fig. 1 : 91), le procédé selon l'invention restant tout à fait compatible avec l'existant.

Dans une première étape, illustrée par la figure 7A, la carte à puce 2a est adressée par le navigateur 10 du terminal 1, via les couches 13 et 23a. On récupère, par une commande de type "GET" par exemple, un formulaire de chargement à partir de la carte à puce 2a, formulaire en langage "HTML" que l'on appellera arbitrairement "download.html".

Cette récupération est effectuée en consultant une page correspondante dont l'UFL est typiquement de la forme suivante :

$$\text{http://127.0.0.1:8080/download.html} \qquad (3),$$

dans laquelle http://127.0.0.1:8080 est l'adresse URL de rebouclage proprement dite, telle qu'elle a été définie par la relation (1), et "download.html" la page "HTML" à obtenir. Cette requête met en oeuvre une session entre agents appariés comme il a été décrit en regard des figures 2 à 4, selon un premier aspect de l'invention.

La carte à puce 2a envoie le formulaire "download.html" lors d'une deuxième étape, toujours par ouvertures de sessions entre agents intelligents appariés, selon le procédé de l'invention. Le formulaire obtenu peut être affiché sur un écran 5a par l'intermédiaire du navigateur 10 et est référencé P sur la figure 7A qui illustre schématiquement ce processus. Ce formulaire constitue une page d'accueil pour l'abonné désirant s'enregistrer sur un serveur d'annuaire $SA_i$. La carte à puce 2a se comporte alors comme un serveur "WEB".

La page P peut comporter, de façon usuelle, différents éléments de type graphique et/ou de type texte, ainsi que des éléments interactifs de commande (bouton de type dit "radio", cases à cocher, zones d'entrées de données, etc.).

On va supposer, dans un premier temps, que la carte à puce 2a offre, à son porteur (non représenté), la possibilité de s'enregistrer sur un serveur d'annuaire unique, que l'on peut appeler $SA_u$, et selon un profil unique d'abonné, que l'on peut appeler $PA_u$. On suppose également que ce profil unique $PA_u$ est enregistré dans la carte à puce 2a. Dans cette hypothèse, le formulaire P (c'est-à-dire la page d'accueil) affiché sur l'écran 5a, peut se réduire à une présentation minimale, dont la figure 7B illustre un exemple possible : formulaire $P_1$.

Le formulaire $P_1$ comprend diverses zones de textes, sous la référence unique $Z_t$. Ces zones affichent typiquement le nom "xxx" du serveur d'annuaire ($SA_u$), l'action proposée *"enregistrement"* et diverses aides (par exemple *"cliquer ici"*). Puisque l'on a supposé que les données du profil d'abonné $PA_u$ étaient enregistrées dans la carte à puce 2a, il suffit de prévoir un bouton d'envoi $B_s$. Le fait pour l'abonné de cliquer sur ce bouton à l'aide d'une souris (figure 2A : 6b) ou d'appuyer sur la touche *"entrée"* d'un clavier (figure 2A : 6a) déclenche l'envoi du formulaire vers la carte à puce 2*a*.

Dans une autre variante du procédé selon l'invention, les données afférentes au profil de l'abonné sont saisies directement par celui-ci. Dans cette hypothèse, le formulaire est plus complexe. La figure 7C illustre un exemple possible de formulaire, référencé $P_2$. Il comprend une première zone de texte fixe $Z_{t1}$, similaire à celle de la figure 7B ($Z_t$) et une ou plusieurs zone(s) de saisie de données, sous la référence unique $Z_{t2}$. On prévoit comme précédemment un bouton d'envoi $B_S$, mais aussi avantageusement un bouton $B_{raz}$ de ré-initialisation du formulaire $P_2$, qui permet d'effacer les données saisies en cas d'erreur. La ou les zones de saisies de données $Z_{t2}$ peu(ven)t être du type dit "TEXTAREA" en langage "HTML" et présenter une facilité dite d' "ascenseur" pour l'affichage déroulant de textes longs.

Le code "HTML" nécessaire pour programmer un tel formulaire est bien connu en soi et est à la portée de l'homme de métier. Il n'est pas nécessaire de le détailler plus avant. On peut cependant indiquer qu'il contient notamment une ligne de code en langage "HTML" qui se présente typiquement sous la forme :

$$\text{<form action="http://127.0.01:8080/cgi-smart/pe">} \qquad (4)$$

dans laquelle http://127.0.01:8080 est l'URL de rebouclage de la relation (1), "cgi-smart" le répertoire "CGI" précité contenant un script "pe" associé à une des applications stockées dans la carte à puce 2*a*, référencée par exemple $A_e$. Cette application permet l'enregistrement de l'abonné sur l'annuaire $SA_u$ avec le profil $PA_u$. Cette action s'effectue de la manière décrite en regard des figures 5 et 6, par mise en oeuvre des fonctionnalités offertes par la carte à puce 2*a*, "CGI", d'une part, et client/serveur, d'autre part. L'application $A_e$ se comporte comme un client.

Dans le premier cas (figure 7B), il n'est pas nécessaire de passer des paramètres à la carte à puce 2*a*. En effet, les données de profil d'abonné $PA_u$ sont uniques et enregistrées dans la carte à puce 2*a*.

Dans le second cas (figure 7C), les données saisies sont passées en tant que paramètres à la carte à puce 2a, sous la forme d'une requête "HTTP".

La figure 7D illustre schématiquement le processus global de la phase d'enregistrement d'un abonné sur un serveur d'annuaire $SA_u$, via le réseau Internet *RI*.

La référence unique $S_{WEB}$ regroupe différents modules qui ont été explicités en regard des figures 5 et 6, modules permettant à la carte à puce 2*a* d'offrir les fonctionnalités combinées de client/serveur WEB et de passerelle "CGI". On a également supposé que l'application $A_e$ permettant la mise en oeuvre du protocole d'enregistrement "PE" était associée à un agent traducteur de script dédié $At_e$. Il s'agit d'une configuration conforme à celle illustrée par la figure 6. Cependant, comme il a été indiqué, la traduction des scripts peut s'effectuer d'autres manières (par l'agent "WEB" $232a_1$), etc. L'envoi du formulaire, par ouverture de sessions entre agents appariés, va permettre d'activer l'application $A_e$, par l'intermédiaire de l'agent traducteur de script $At_e$.

Lors d'une étape ultérieure, l'application $A_e$ pose une requête "HTTP" par ouverture de sessions entre paires d'agents, notamment impliquant un agent de type "réseau" (figure 6 : 132). La requête est transmise à un serveur d'annuaire $SA_i$, avec passage de paramètres. Les paramètres sont constitués notamment par des données de profil abonné, de façon à permettre son enregistrement dans l'annuaire. L'adresse "URL" du serveur d'annuaire est obtenue à partir d'un profil d'abonné enregistré dans la carte à puce 2*a* ou à partir de données saisies dans le formulaire $P_2$ (figure 7C).

*A priori,* le processus d'enregistrement est terminé à ce stade. Il peut cependant comprendre une ou plusieurs étapes supplémentaires. Une de ces étapes peut consister en l'envoi par l'annuaire d'un accusé de réception, sous la forme d'une requête "HTTP" adressant la carte à puce 2*a*. L'accusé de réception peut comprendre une information indiquant que l'inscription s'est déroulée de façon satisfaisante, ou au contraire un code d'erreur. Dans ce dernier cas, le processus d'enregistrement doit être répété. Le serveur peut requérir l'envoi de données manquantes ou la ré-émission de données incorrectes ou corrompues. La demande d'enregistrement peut également être rejetée, notamment si la limite de validité de l'abonnement est dépassée.

Dans une variante préférée du procédé selon l'invention, il est possible, pour un abonné, de s'enregistrer sur plusieurs annuaires différents. Dans cette variante de réalisation, il est en général nécessaire de disposer également de plusieurs protocoles d'enregistrement. Pour ce faire, plusieurs applications associées à ces protocoles sont stockées dans la carte à puce 2*a*, que l'on peut référencer $A_{e1}$, ..., $A_{ei}$, ...$A_{en}$, en admettant que le nombre maximum de protocoles distincts est *n*.

Comme précédemment, les données associées aux profils d'abonné, que l'on référencera $PA_1$, ..., $PA_i$, ..., $PA_q$, peuvent être stockées dans la carte à puce 2*a*, ou au contraire fournis, au coup par coup, par l'abonné selon une méthode similaire à ce qui à été décrit en regard de la figure 7C, par saisie dans un formulaire approprié. *q* est le nombre maximum de profils d'abonné disponibles. On notera que *q* n'est pas forcément égal à *n*. En effet, un serveur d'annuaire donné, que l'on référencera arbitrairement $SA_i$, peut accepter plusieurs occurrences distinctes d'un même abonné, d'une part. D'autre part, plusieurs serveurs d'abonné, bien que distincts, peuvent accepter un même profil d'abonné et éventuellement partager un protocole d'enregistrement commun.

Quelle que soit la méthode utilisée pour effectuer la sélection de tout ou partie des serveurs d'annuaires, les paramètres passés à la carte à puce 2a doivent permettre de sélectionner un ou plusieurs profils d'abonné, $PA_A$ à $PA_D$, et en dériver une ou plusieurs adresses "URL". Les actions demandées, par les paramètres passés à la carte à puce 2a, sont typiquement du type :

$$?sa_i = enr + pa_j \qquad (5),$$

avec "$sa_i$ " le nom du serveur d'annuaire d'indice arbitraire $i$ parmi les $n$ possibles, "enr" l'action requise d'enregistrement proprement dit et "$pa_j$" le profil d'abonné à utiliser parmi les $q$ possibles.

Une ou plusieurs requêtes "HTTP" sont posées et transmises aux serveurs d'annuaires concernés, que l'on référencera $SA_A$ à $SA_n$, s'il existe $n$ serveurs d'annuaire sélectionnables.

Le choix présenté sur la page d'accueil P est naturellement fonction de la carte à puce 2a insérée dans le lecteur 3. Les choix présentés dépendent des droits qui sont accordés à l'abonné possesseur de la carte à puce 2a, notamment des abonnements souscrits à des services donnés et de leurs périodes de validité.

Une deuxième phase du procédé selon l'invention, c'est-à-dire la localisation, sur le réseau Internet, d'un abonné associé à un identifiant quelconque peut se dérouler de façon très similaire à la phase d'enregistrement.

Pour ce faire, il est nécessaire d'interroger un ou plusieurs serveur(s) d'anriuaire(s). Il est nécessaire aussi de disposer d'au moins un protocole "PL" spécifique de localisation de cet abonné. Enfin, s'il existe plusieurs serveurs d'annuaires interrogeables, $SA_1$ à $SA_n$, il est généralement nécessaire également, comme dans le cas de l'enregistrement, de disposer de plusieurs protocoles de localisation distincts.

Ces protocoles de localisation peuvent être mis en oeuvre à l'aide d'applications stockées dans la carte à puce 2a.

Le processus de localisation se déroule de façon tout à fait similaire à celui de l'enregistrement de l'abonné sur un ou plusieurs serveurs d'annuaire $SA_i$. La seule exception notable est qu'un profil d'abonné $PA_j$ n'est plus explicitement requis. Il suffit de fournir à la carte à puce 2a l'identifiant de l'abonné recherché et l'adresse du serveur d'annuaire $SA_i$, ou pour le moins des paramètres permettant à l'application associée à l'un des protocoles de localisation de déterminer cette adresse "URL". Un profil d'abonné $PA_j$ peut toutefois être utilisé pour en dériver automatiquement l'adresse "URL" du serveur d'annuaire $SA_i$ à l'aide duquel lequel un abonné appelant désire localiser un abonné appelé. Comme il a été indiqué, l'identifiant de l'abonné recherché peut être son adresse e-mel, adresse qui se présente typiquement sous la forme suivante :

$$pseudo@fournisseur.com \qquad (6),$$

avec "pseudo" le nom d'utilisateur de messagerie de l'abonné ou plus généralement un pseudonyme, et "fournisseur.com" le nom et le suffixe du prestataire de service Internet ".com" pouvant être remplacé selon les cas par divers suffixes : ".fr", ".net", etc.).

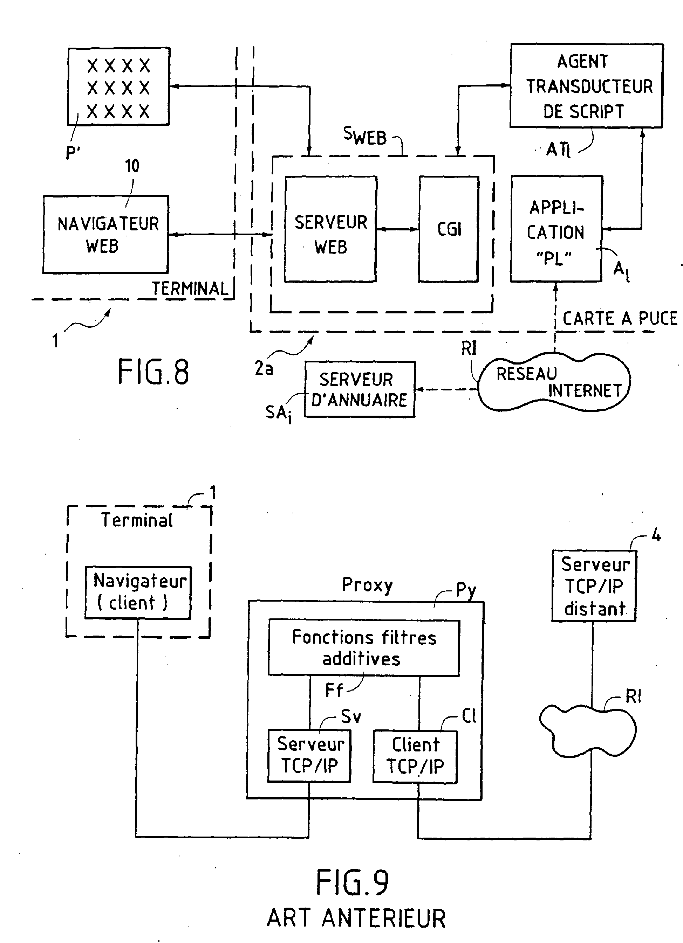

La figure 8 illustre les principales étapes de la phase de localisation d'un abonné avec lequel on veut établir une communication téléphonique par interrogation d'un annuaire $SA_i$

Dans une première étape, la carte à puce 2a est adressée par le navigateur 10 du terminal 1, via les couches 13 et 23a. On récupère, par une commande de type "GET" par exemple, un formulaire de chargement à partir de la carte à puce 2a sous la forme d'une page d'accueil référencée P'. Cette page d'accueil peut prendre différents aspects, similaires notamment à ceux décrits en regard de la figure 7C. Selon qu'il y ait un ou plusieurs choix possibles, l'abonné sélectionne un ou plusieurs serveurs d'annuaires et fournit des données d'identification de l'abonné recherché. Sur la figure 8, on a supposé qu'un seul serveur d'annuaire $SA_i$ était interrogeable.

La page est transmise sous forme d'une requête "HTTP" à la carte à puce 2a et est interprétée par un agent traducteur de script $At_l$ associé à une application $A_l$ de mise en oeuvre du protocole "PL".

Par le double mécanisme client/serveur "WEB" et "CGI" (module référencé $S_{WEB}$ comme précédemment), une requête du type :

$$http://127.0.0.1/? \; sa_i = loc + pseudo@fournisseur.com \qquad (7),$$

est interprétée par la carte à puce 2*a* comme une demande de localisation de l'abonné dont l'identifiant est (6) sur le serveur d'annuaire $SA_i$.

Une requête "HTTP" est transmise à ce serveur qui renvoie les informations demandées, dans la mesure où elles sont disponibles. Il recherche dans sa base de données une adresse "IP" correspondant aux données d'identification reçues. En cas de succès, c'est-à-dire si l'abonné demandeur est effectivement enregistré, si cet abonné a le droit d'obtenir cette adresse et si les données reçues sont correctes, les données retransmises comprennent l'adresse "IP" de l'abonné recherché, ce qui permet de le localiser.

Ces différentes étapes mettent en oeuvre des sessions entre agents appariés, selon un des aspects de l'invention.

On peut également stocker dans la carte à puce 2*a* plusieurs applications, chacune étant destinée à la mise en oeuvre d'un protocole de localisation distinct, a priori associé à un serveur d'annuaire également distinct.

Dans une variante préférée du procédé selon l'invention, on stocke dans la carte à puce 2*a* des applications permettant la mise en oeuvre de plusieurs protocoles d'enregistrement, plusieurs protocoles de localisation et des fichiers de données pour l'enregistrement de plusieurs profils d'abonné. Cette disposition avantageuse permet de transformer la carte à puce 2*a* en base de données portable multi-annuaire.

Dans une autre variante encore du procédé selon l'invention, l'utilisation d'une carte à puce 2*a* permet une authentification robuste de son possesseur, lors de la phase d'enregistrement et/ou de la phase de localisation. En effet, il est possible de stocker des données de sécurité dans la carte à puce qui reste propriété de son possesseur. De telles donnés de sécurité peuvent être constituées par des clés de chiffrage.

Du fait que, selon l'un des aspects avantageux du procédé selon l'invention, la carte à puce 2*a* peut communiquer directement avec le réseau Internet, par la mise en oeuvre de sessions entre agents, ces données n'ont pas à être transmises à un dispositif externe, serait-ce le terminal 1. Les traitements touchant à la sécurité sont effectués directement par la carte à puce 2*a*. Cette façon de procéder offre donc un degré de sécurité beaucoup plus élevé que la simple utilisation de couches logicielles dites sécurisées des navigateurs "WEB" récents, connues sous l'abréviation anglo-saxonne "SSL" (pour "Secure Socket Layer").

L'authentification proprement dite peut s'effectuer en ayant recours à la technique dite de certificat, en association avec les clés de chiffrage précitées, stockées dans la carte à puce 2*a*. Cette procédure peut nécessiter des transactions supplémentaires entre la carte à puce 2*a* et le ou les serveur(s) d'annuaire concerné(s), à l'aide de requêtes "HTTP" transitant par le réseau .Internet *RI.* En fonction du résultat, positif ou négatif, de l'authentification, l'abonné est autorisé ou non à effectuer les traitements, enregistrements ou localisations qu'il désire réaliser.

Selon un autre aspect de l'invention, en ayant recours de nouveau à des agents intelligents, on implante directement sur la carte à puce 2a une fonction dite de "proxy TCP/IP". Cette fonction est réalisée par une application logicielle particulière que l'on appellera "filtre "ci-après.

La fonctionnalité "proxy" est bien connue dans le domaine des applications Internet, mais ne peut être implantée dans les cartes à puce des systèmes selon l'art connu.

Avant de décrire une architecture conforme à l'invention, on va tout d'abord rappeler brièvement les caractéristiques d'un "proxy" classique selon l'art connu, par référence à la figure 9.

Dans la technologie "TCP/IP", on nomme "proxy" une entité logicielle *Py* qui réalise, d'une part, un serveur "TCP/IP" *Sv* et, d'autre part, un client "TCP/IP" *Cl.* L'entité logicielle *Py* réalise une connexion entre une client local et un autre serveur TCP/IP distant.

Un proxy *Py* réalise usuellement des fonctions de filtre et/ou de sécurité. Par exemple, un proxy "HTTP" assure généralement la connexion d'un navigateur, par exemple le navigateur 10 du terminal 1, à un serveur "WEB" 4, dans une entreprise (ce qui est connu sous la dénomination "firewall" ou "pare-feu"). Il peut s'agir également d'un proxy dit "SSL", que l'on peut définir comme étant un "proxy" local au terminal, qui réalise des opérations de sécurité nécessaires (authentification - confidentialité - intégrité) à l'établissement d'un tunnel sécurisé au travers du réseau Internet *RI.*

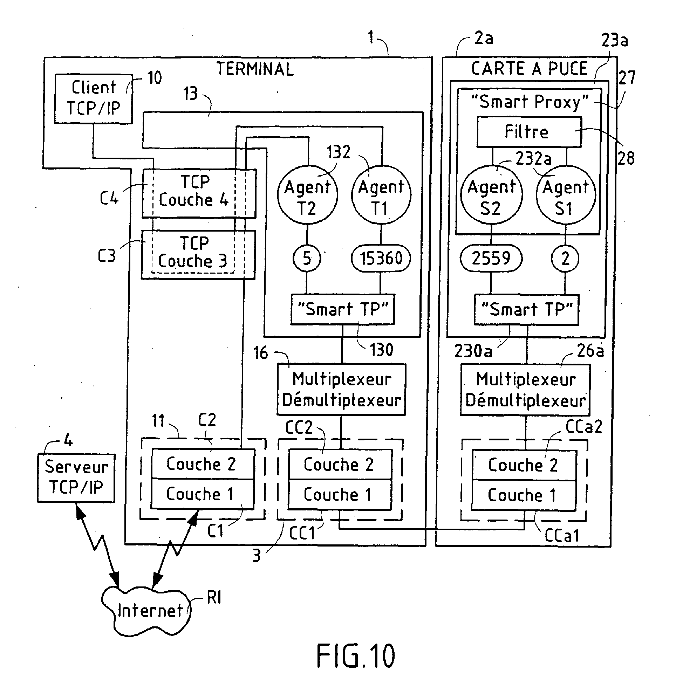

On va maintenant décrire une architecture logique intégrant la fonction "proxy " directement dans une carte à puce, selon un aspect supplémentaire de l'invention, par référence à la figure 10.

Les éléments communs aux figures précédentes portent les mêmes références et ne seront re-décrits qu'en tant que de besoin. Pour simplifier la description, les agents, côté terminal 1 sont regroupés sous la référence unique 132, et côté carte à puce 2*a*, sous la référence unique 232*a*. Ils seront différenciés dans ce qui suit par la lettre "T", pour "terminal", et "S" pour "Smart Card" (carte à puce), lettres associées à des chiffres en indice. Le "proxy" 27 réalisé sur la carte à puce 2*a* sera appelé *"Smart Proxy"* dans ce qui suit.

Le *"Smart Proxy"* 27 est réalisé par l'association de quatre agents, deux, côté terminal 1 : $T_1$ et $T_2$, et deux, côté carte à puce 2*a*, : $S_1$ et $S_2$, et d'une fonction filtre 28, comme décrit ci-après :

- un agent "Terminal/Client/Réseau" $T_1$ réalise un serveur TCP/IP (par exemple sur le port 8080) ;
- un agent "Carte/Serveur/local" $S_1$ est associé par une session à l'agent $T_1$, cet agent réalisant typiquement les fonctions d'un serveur "WEB" ;

- une fonction filtre 28 qui est déterminée en fonction d'informations en provenance de l'agent $T_1$, cette dernière fonction étant en mesure d'émettre ou de recevoir des *"pdu"* vers/depuis les agents $S_1$ et $S_2$ ;
- un agent $S_2$ "Carte/Client/Local", une instance de cet agent étant créée de manière dynamique par la fonction filtre 27 et $S_2$ ouvrant une session avec l'agent "réseau" $T_2$, auquel il indiquera l'adresse du serveur distant Internet 4 auquel $S_2$ veut être relié ; et
- un agent $T_2$ "Terminal/Serveur/Réseau" réalise la fonction d'un client "TCP/IP", qui est connecté à un serveur Internet 4.

Le mécanisme de création du *"Smart Proxy"* 27 est décrit ci-dessous.

Un client "TCP", que l'on appellera ci-après "cTCP", typiquement le navigateur "WEB" 10, ouvre une connexion avec l'agent "réseau" $T_1$. Une session $T_1$-$S_1$ est ensuite créée. Par exemple l'URL suivante :

$$\text{http://127.0.0.1:8080/?des1=xxx.com:80/yyy/content.html} \qquad (8)$$

provoque l'ouverture d'une session entre les agents $T_1$ et $S_1$.

A partir des données échangées par $T_1$ et $S_1$, l'application associée à l'agent $S_1$ (un serveur WEB) détermine quelle fonction filtre 28 doit être utilisée. Ainsi "des1" est le nom d'un filtre particulier, "xxx.com" est le nom arbitraire d'un serveur Internet, par exemple du serveur 4, "80" un numéro de port et "/yyy/content.html" est le nom arbitraire d'un fichier sur ce serveur, constitué dans l'exemple par une page en langage "HTML". Dans l'exemple, le filtre "des1" est un filtre permettant de réaliser une opération de déchiffrage et/ou de chiffrage selon un algorithme de type "DES" ("Data Encryption System"). Dans le cadre de l'invention, le serveur 4 est constitué par un serveur d'annuaire (par exemple figures 7D et 8 : $SA_i$).

En d'autres termes, l'URL "carte", défini par la relation 2, encapsule un autre URL destinée au monde extérieur, la première partie de cette URL étant constituée par l'URL de rebouclage tel que définit par la relation (1).

Le filtre 28 "des1" crée une instance de client $S_2$, une session est ouverte entre les agents $S_2$ et $T_2$ Les données insérées dans la première *"pdu" ("pdu OPEN")* précisent le nom du serveur Internet ("xxx.com") et son numéro de port associé (80).

L'agent $T_2$ ouvre une connexion de type "TCP" avec le serveur distant "sTCP" ("zzz.com"). Une fois que cette dernière est établie, un jeton est émis à destination de $S_2$.

Au terme de ces échanges un *"Smart Proxy"* 27 a été crée, une fonction filtre 28 qui réside dans la carte à puce 2*a* est en mesure de traiter les données (en provenance du réseau Internet *RI*) reçues par les agents "réseau". Le filtre 28 contrôle les données émises par les agents *"réseau"*, $T_1$ et $T_2$, de manière logique. Il se comporte comme un "proxy TCP" qui contrôle les données échangées entre le client "cTCP" et le serveur "sTCP".

Pour fixer les idées, on a représenté sur la figure 10 des numéros de référence arbitraires des différents agents : fixes, "2" et "5", pour les agents de type "serveur", respectivement $T_2$ et $S_1$, et variables ou éphémères, "15360" et "2559", pour les agents de type "client", respectivement $T_1$ et $S_2$,

D'autres types de filtres peuvent être implantés dans la carte à puce 2a. Ces filtres peuvent alors être utilisés pour la mise en oeuvre des négociations d'échange de clés de chiffrement ou de négociations de réservation d'un chemin de routage de caractéristiques particulières. A titre d'exemple; l'abonné appelant désirant transmettre un fichier multimédia à débit élevé ou une grande quantité de données, il souhaite obtenir une garantie de bande passante minimale et/ou de non-encombrement du trafic, fusse à titre onéreux.

Précisément, un autre type de filtre sur la carte à puce 2a peut réaliser une fonction de tarification, basée classiquement sur le débit ou la quantité de données échangées, mais aussi sur le type de chemin négocié avec un prestataire de service pendant la phase de signalisation. Pour ce faire, comme il est bien connu en soi, on utilise essentiellement des compteurs.

Une fois un abonné localisé, la fonction "proxy", implantée directement sur la carte à puce 2a, est utilisée pour les étapes correspondant aux opérations de signalisation et/ou d'échanges de données proprement dites entre un abonné appelant et un abonné localisé et appelé.

On doit bien comprendre que le procédé selon l'invention, utilisé par un abonné appelant, n'exige pas que l'abonné appelé mette en oeuvre également ce même procédé. En effet, et c'est un avantage supplémentaire de l'invention, l'un des abonnés, par exemple l'abonné appelé, peut utiliser un terminal standard, conforme à l'art connu (figure 1 : 9*b*). Il n'est pas nécessaire notamment que ce terminal soit muni d'un lecteur de carte à puce. En d'autres termes, au moins en ce qui concerne l'une des installations associées à l'un des abonnés, appelant ou appelé, le procédé selon l'invention est entièrement compatible avec l'existant, matériel et logiciel de téléphonie, l'autre installation ne nécessitant que peu de modifications pour devenir conforme au procédé de l'invention.

Cependant, on va supposer que, dans une variante préférée de l'invention, l'abonné appelant et l'abonné appelé, utilisent tous deux un terminal mettant en oeuvre le procédé selon l'invention. Ci-après, le côté "appelant" sera repéré arbitrairement par la lettre de référence "*a*" et le côté "appelé" par la lettre de référence "*b*".

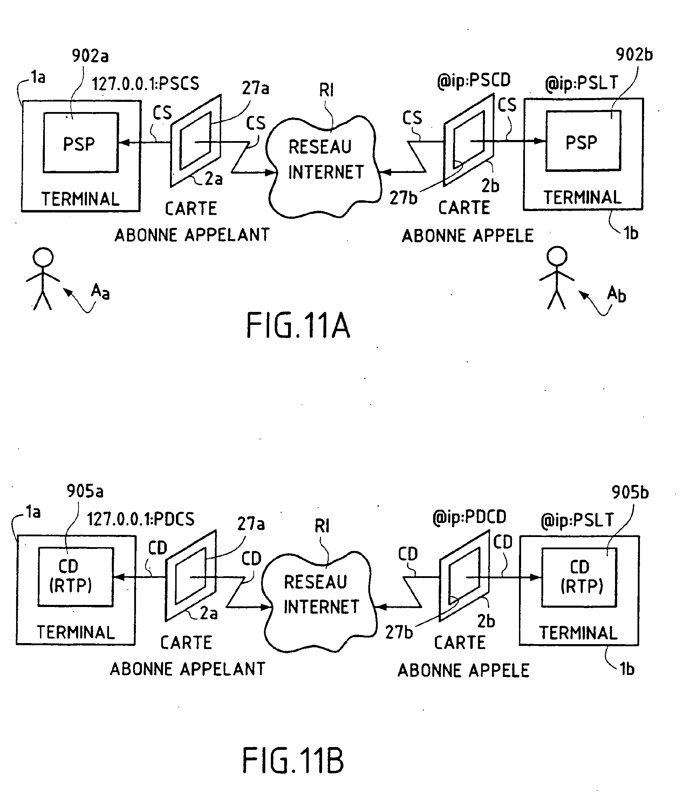

La figure 11A illustre schématiquement l'architecture d'un système de téléphonie mettant en oeuvre la fonctionnalité "proxy" pour le canal de signalisation *CS*, du côté abonné appelant *Aa* et du côté abonné appelé *Ab*.

Sur cette figure, les terminaux appelants 1*a* et 1*b* sont réduits, pour la commodité de la description, aux seules pièces de logiciel associées aux protocoles de signalisation "PSP", 902*a* et 902*b*, respectivement. En soi, ces pièces de logiciel sont, *a priori,* conformes aux pièces de logiciel correspondantes de l'art connu (voir figure 1).

Cependant, la fonctionnalité "proxy" peut nécessiter leur adaptation pour pouvoir supporter des cartes à puces Internet mettant en oeuvre le procédé selon l'invention. Pour le moins, comme il va l'être montré, elles doivent pouvoir être paramétrées de manière à modifier le numéro de port (de type "TCP") de signalisation. Certains logiciels de téléphonie, en version standard du commerce, ne permettent pas ce paramétrage. On peut citer, à titre d'exemple non limitatif le logiciel "Netmeeting", alors que le logiciel "Webphone" le permet, logiciels tous deux cités dans le préambule de la présente demande de brevet.

Cependant, l'intérêt d'utiliser un "proxy" de signalisation est de pouvoir mettre en oeuvre une procédure de simple ou mutuelle authentification entre l'abonné appelant *Aa* et l'abonné appelé *Ab* qui peut être utile, par exemple, pour l'acceptation des communications.

La carte à puce 2*a* de l'abonné appelant *Aa* est associée à un serveur, constitué, selon l'invention, par un agent réseau serveur "TCP", que l'on appellera de signalisation, sur un port "TCP". Ce port sera appelé "PSCS" pour "Port Signalisation Carte Source". La carte à puce 2*a* de l'abonné appelant *Aa* se connecte au port de signalisation correspondant de la carte à puce 2*b* de l'abonné appelé *Ab.* Ce port sera appelé "PSCD" pour "Port Signalisation Carte Destination". Il est localisé à une adresse "IP" que l'on appellera arbitrairement "@ip". La carte de l'appelé 2*b* réalise un "proxy" de signalisation entre le port "TCP" "PSCD" et le port "PSLT" ou "Port de Signalisation du Logiciel de Téléphonie" du terminal 1*b* de l'abonné appelé *Ab*.

Ces transactions nécessitent l'établissement de sessions entre agents appariés, selon l'une des caractéristiques du procédé de l'invention qui a été explicitée en regard des figures 3 à 5, et la mise en oeuvre de la fonctionnalité "proxy", selon une autre caractéristique du procédé de l'invention qui a été explicitée en regard de la figure 10.

Sur la figure 11A, les "proxys" des cartes à puce 2*a* et 2*b* sont représentés schématiquement par les références 27*a* et 27*b*. Ils comprennent en réalité les différents éléments représentés sur la figure 10 : agents $S_1$ et $S_2$, et filtre 28.

Pour fixer les idées, on va maintenant décrire, dans un exemple de réalisation pratique, les principales étapes de la phase de signalisation. Pour fixer les idées, on suppose que l'adresse "URL" de rebouclage de carte est celle donnée par la relation (1), soit 127.0.0.1 et le numéro de port arbitraire 1731. Le numéro de port des logiciels de téléphonie est généralement 1503. L'adresse de l'abonné appelé *Ab*, telle qu'elle a été déterminée lors de la phase de localisation, est @ip.

Du côté abonné appelant *Aa* :

1/ étape de préparation : configuration du "proxy" 27a de manière à opérer la translation 127.0.0.1:1731 à @ip:1503 ;
2/ étapes d'appel :

2a/ "PSP" appelant 902a appelle 127.0.0.1:1731 ;
2b/ la carte à puce appelante 2*a* appelle @ip:1503 ; et
2c/ la carte à puce appelée 2*b* appelle @ip:1502.

Du côté abonné appelé *Ab* :

1/ étape de préparation préalable : modification du numéro de port de signalisation de "PSP" (appelé) de 1503 à 1502 ; et
2/ étape de communication entre la carte à puce 2*b* et le terminal 1*b* par mise en oeuvre d'un agent de type réseau "TCP" sur le port 1503 et de la fonctionnalité "proxy" 27*b* entre les ports 1503, en entrée de carte, et 1502 en sortie. Naturellement, si seul le système d'abonné appelant, 1a-2a, est du type conforme à l'invention, la carte à puce 2a appelle directement le système d'abonné appelé à l'adresse "URL" @ip:1502.

De manière optionnelle, une paire de clés de chiffrement peut être négociée au cours de la procédure de signalisation. Les échanges des données correspondantes s'effectuent également par l'établissement de sessions entre agents appariés.

La carte à puce conforme au procédé de l'invention peut également se comporter comme un "proxy" (de type "UDP") de protocole de d'échange de données, sur le canal de données CD. Comme précédemment, cette fonctionnalité peut nécessiter l'adaptation des logiciels de téléphonie de manière à supporter des cartes à puce conformes au procédé de l'invention.

Cependant, là aussi, la mise en oeuvre d'un "proxy" d'échange de données présente un intérêt certain. Celui-ci réside dans le fait de pouvoir mettre en oeuvre une procédure chiffrement/déchiffrement des informations. La norme G723, par exemple, qui compresse le son avec des débits compris entre 5,3 Kbps et 6,3 Kbps, est compatible avec les débits des cartes à puce actuelles, débits typiquement compris entre 9600 bps et 105900 bps. Comme il a été décrit, en regard de la figure 10, le filtre du "proxy" peut être notamment un filtre permettant de réaliser une opération de déchiffrage et/ou de chiffrage selon un algorithme de type "DES".

La figure 11B illustre schématiquement l'architecture d'un système de téléphonie mettant en oeuvre la fonctionnalité "proxy", pour le canal de données *CD*, du côté abonné appelant *Aa* et du côté abonné appelé *Ab*. Sur la figure 11B, les "proxys" des cartes à puce 2*a* et 2*b* sont représentés schématiquement par les références 27*a* et 27*b*. Ils comprennent en réalité, comme précédemment, les différents éléments représentés sur la figure 10 : agents S$_1$ et S$_2$, et filtre 28.

La carte à puce 2*a* de l'abonné appelant *Aa* est associée à un serveur constitué par un agent réseau serveur de type "UDP" d'échange de données sur un port "UDP", que l'on appellera "PDCS" pour "Port Données Carte Source". La carte à puce 2*a* de l'abonné appelant *Aa* se connecte au port d'échange de données de la carte à puce 2*b* de l'abonné appelé *Ab,* que l'on appellera "PDCD" pour "Port Données Carte Destination", carte localisée à une adresse "IP" arbitraire "@ip". La carte à puce 2*b* de l'abonné appelé *Ab* réalise un "proxy" d'échange de données entre le port "UDP" "PDCD" et le port "PDLT" ou "Port de Données du Logiciel de Téléphonie" du terminal 1*b*. Il est nécessaire dans ce cas de mettre en oeuvre deux "proxy" d'échanges de données : le "proxy" 27*a* de l'abonné *Aa* appelant vers l'abonné appelé A*b*, et l'autre 27*b* de l'abonné appelé *Ab* vers l'abonné appelant *Aa*.

Comme précédemment, si seul le système d'abonné appelant, 1a-2a, est du type conforme à l'invention, la carte à puce 2a appelle directement le système d'abonné appelé.

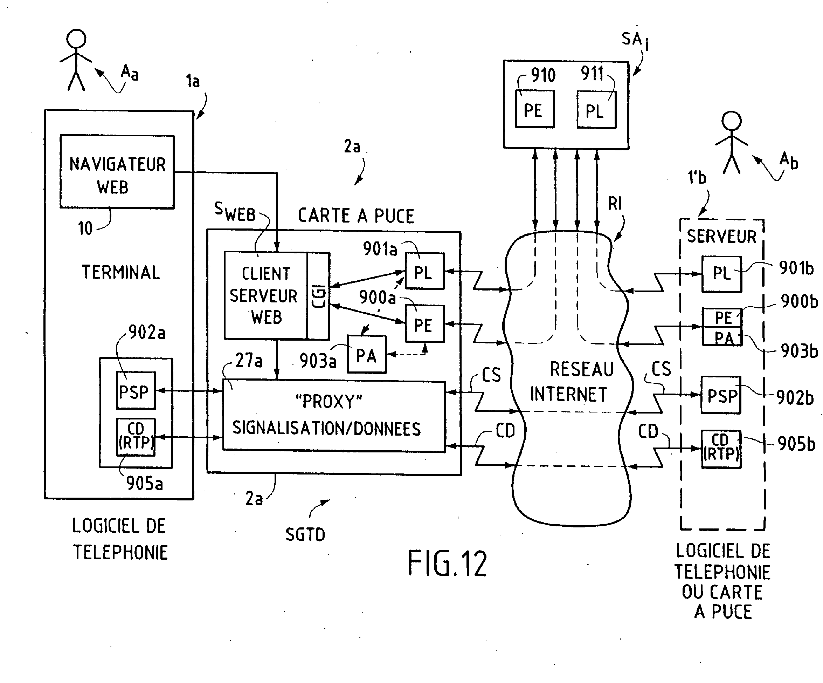

La figure 12, synthèse des figures 11A et 11B, illustre schématiquement l'architecture générale d'un système de gestion de transmission de données téléphoniques *SGDT* (et, de façon plus générale, de données multimédias) entre un abonné appelant *Aa* et un abonné appelé *Ab,* plus précisément entre un système appelant comprenant le terminal appelant 1*a* coopérant avec la carte à puce 2*a*, et un système appelé dit serveur, référencé globalement 1'*b.* Le système appelé 1'*b* peut présenter indifféremment une configuration similaire au système appelant, c'est-à-dire conforme à l'invention : terminal 1*a* coopérant avec une carte à puce 2*a* (tel que décrit sur la figure 11A et/ou la figure 11B), ou la configuration d'un système de l'art connu (voir figure 1 : 9*b*). Les éléments communs aux figures précédentes portent les mêmes références et ne seront redécrits qu'en tant que de besoin.

La figure 12 illustre les différentes interactions entre composants élémentaires du système de gestion de transmission de données téléphoniques selon l'invention, tels qu'elles ont été explicitées en regard notamment des figures 3 à 8, et 10 à 11B. De façon plus précise encore, la carte à puce 2*a* illustre un mode de réalisation préféré de l'invention pour lequel les applications associées aux protocoles d'enregistrement "PE" 900*a* et au protocole de localisation "PL" 901*a*, ainsi qu'un profil d'abonné "PA" 903*a* sont enregistrés dans des mémoires de cette carte à puce 2*a* (comme explicité par les figures 7D et 8). De même, on a supposé que la carte à puce 2a présente la fonctionnalité "proxy" 27*a*, aussi bien pour le canal de signalisation *CS* et que pour le canal de données *CD* (figure 11A et 11B). Comme il a été précédemment décrit, le proxy 27a est sous le contrôle du client/serveur *SWEB* de la carte à puce 2*a*.

Enfin, bien qu'un seul serveur d'annuaire *SA$_i$* ait été représenté sur la figure 12, dans un mode de réalisation préféré encore, on stocke dans la carte à puce 2*a* des applications permettant la mise en oeuvre de plusieurs protocoles d'enregistrement, plusieurs protocoles de localisation et des fichiers de données pour l'enregistrement de plusieurs profils d'abonné. Cette disposition avantageuse permet de transformer la carte à puce 2*a* en base de données portable multi-annuaire. En soi, le(s) serveur(s) est(sont) tout à fait similaires aux serveurs de l'art connu, par exemple au serveur 91 de la figure 1. Il comporte des protocoles d'enregistrement "PE" 910 et de localisation "PL" 911 d'abonnés.

A la lecture de ce qui précède, on constate aisément que le procédé de l'invention atteint bien les buts qu'elle s'est fixés.

La fonctionnalité dite de "proxy" directement implantée dans la carte à puce, en coopération avec la fonctionnalité de client/serveur "WEB" offerte par celle-ci, permet d'utiliser une carte à puce comme "proxy" de protocole de signalisation et/ou d'échange de données.

Si la carte à puce est utilisée comme "proxy" de protocole de signalisation, il est notamment possible de mettre en oeuvre une procédure de simple ou mutuelle authentification entre un abonné appelant et un abonné appelé. Il est également possible de négocier des clés de chiffrement et/ou de réserver un chemin de routage offrant des caractéristiques de transmission pré-établies.

Si la carte à puce est utilisée comme "proxy" de protocole de communication, il est notamment possible de mettre en oeuvre une procédure de chiffrement/déchiffrement. Il est aussi possible d'effectuer des opérations de tarification, par exemple basées sur le débit ou la quantité de données échangées, ou encore en tenant compte de la réservation précédemment effectuée.

Le procédé selon l'invention permet également à un abonné, par exemple appelant, de s'enregistrer sur un ou plusieurs serveurs d'annuaires et/ou de localiser un autre abonné, dit appelé, sur le réseau Internet, également par l'intermédiaire de un ou plusieurs annuaires. La carte à puce présentant les fonctionnalités combinées d'un client/serveur "WEB" et d'une passerelle "CGI", cette disposition permet des communications directes entre la carte à puce et le ou les serveurs d'annuaire. Elle autorise de ce fait le stockage des logiciels spécifiques nécessaires à la mise en oeuvre des protocoles d'enregistrement et/ou de localisation, ce qui permet une grande mobilité. Un ou plusieurs profils d'abonné peuvent également être stockés dans la carte à puce. L'abonné n'est plus astreint à l'utilisation de terminaux configurés spécifiquement pour les protocoles précités.

Le procédé selon l'invention est tout à fait compatible avec l'existant. Il n'est pas requis que l'abonné, appelant ou appelé, se soit enregistré sur un ou plusieurs serveurs d'annuaires en faisant usage du procédé selon l'invention, ni qu'il soit doté d'un terminal muni d'un lecteur de carte à puce selon l'invention. Les transmissions sur le réseau Internet s'effectuent selon les protocoles en vigueur et les communications entre le terminal de l'abonné mettant en oeuvre le procédé selon l'invention et sa carte à puce font appel au protocole normalisé "ISO" précité. On peut donc mettre en oeuvre un lecteur de carte à puce standard. Seule la présence d'une couche logicielle spécifique dans le terminal est nécessaire, ce qui ne nécessite que peu de modifications et peut être réalisé une fois pour toutes, quel que soit le nombre de protocoles d'enregistrement, de localisation et/ou de profils d'abonné portés par la carte à puce, et quelle que soient leurs natures. Il en est de même des filtres de "proxy" implantés dans la carte à puce.

Enfin, l'utilisation d'une carte à puce permet une sécurisation des transactions et, notamment, une authentification "robuste". Elle permet également la négociation de chemin de routage et/ou la tarification des données échangées.

Il doit être clair cependant que l'invention n'est pas limitée aux seuls exemples de réalisations explicitement décrits, notamment en relation avec les figures 3 à 8, d'une part, et 10 à 12, d'autre part.

En particulier, il n'est pas nécessaire que les deux séries de logiciels propriétaires, "PE" et "PL" soient stockées dans la carte à puce, bien que cette disposition soit particulièrement avantageuse. A titre d'exemple non limitatif, la (les) phase(s) d'enregistrement, dans un ou plusieurs serveurs d'annuaire(s), pouvant être réalisée(s) une fois pour toutes, ou pour le moins étant a *priori* moins fréquente(s) que les phases de localisation, on pourrait se contenter de ne stocker dans la carte à puce que les applications spécifiques associées à cette dernière opération. De même, comme il a été indiqué, il est possible de ne pas enregistrer dans la carte à puce les profils d'abonné "PA" (les données pouvant être fournies en temps réel au moment de l'enregistrement de l'abonné dans un serveur d'annuaire particulier). Il est encore possible de n'enregistrer qu'une partie des profils d'abonné, profils qui pourront être fournis de façon automatique.

Enfin, comme il a été indiqué, l'invention n'est pas limitée à la gestion des seules données de type téléphonique. Elle permet plus généralement la gestion d'autres types de données multimédias, notamment de données visiophoniques.

L'invention concerne aussi un procédé de gestion de transmissions de données multimédias via un réseau de type Internet entre un premier système d'abonné et un second système d'abonné comprenant au moins une phase d'échange de données dites de signalisation, via un canal dit de signalisation, à l'aide d'un protocole de signalisation déterminé, et une phase d'échange desdites données multimédias, via un canal dit de données, à l'aide d'un protocole de communication déterminé, caractérisé en ce que, au moins ledit premier système d'abonné comportant un terminal muni d'un navigateur de type "WEB" et d'un lecteur de carte à puce coopérant avec une carte à puce, le terminal et la carte à puce comprenant des moyens de traitement d'information et des moyens de stockage d'information, ladite carte à puce (2a) comportant une première pièce de logiciel (23a), formant une couche protocolaire de communication spécifique et ledit terminal (1a) comportant une seconde pièce de logiciel (13), formant une couche protocolaire de communication spécifique et formant interface avec au moins ledit navigateur de type "WEB" (10) ; lesdites première et seconde pièces de logiciel (13, 23a) comprennent chacune en outre au moins une première entité logicielle autonome $(T_2, S_1)$, de type dit client, et une deuxième entité logicielle autonome $(T_1, S_2)$, de type dit serveur, lesdites entités $(T_1, S_2, T_1, S_2)$ coopérant, grâce auxdits moyens de traitement d'information, de manière à permettre l'établissement de sessions d'échanges de données bidirectionnels entre ledit terminal (1a) et ladite carte à puce (2a) et à ce que ladite carte à puce (2a) offre la fonctionnalité d'un client/serveur de type "WEB", et à permettre l'établissement d'une session d'échanges de données bidirectionnels entre le terminal (1a) dudit premier système d'abonné et ledit second système d'abonné (1'b) via ledit réseau de type Internet (*RI*), lesdites entités logicielles autonomes communiquant au moyen d'unités de données de protocole prédéterminées ;

- en ce qu'il comprend la réalisation, dans les moyens de stockage de ladite carte à puce (2a), d'une pièce de logiciel applicative de caractéristiques fonctionnelles déterminées, dite filtre (28), recevant et/ou émettant des unités de données de protocole vers lesdites et/ou à partir desdites première et deuxième entités logicielles autonomes ($S_2$, $S_1$), de types respectifs client et serveur, comprises dans ladite seconde pièce de logiciel spécifique (23*a*) ; la réalisation de ladite pièce applicative étant sous le contrôle de ladite entité logicielle autonome de type serveur ($S_1$) ; et

- en ce que ledit filtre (28) coopère avec lesdites entités logicielles autonomes ($S_2$, $S_1$) de ladite seconde pièce de logiciel spécifique (23*a*) pour ouvrir, grâce auxdits moyens de traitement d'information,du terminal et de la carte à puce, une session avec lesdites entités logicielles autonomes ($T_2$, $T_1$) de ladite première pièce de logiciel spécifique pour former une fonction dite de "proxy " (27a) et contrôler des caractéristiques prédéterminées des échanges de données transitant entre ledit premier système d'abonné (1*a*, 2*a*) et ledit second système d'abonné (1'*b*), via au moins l'un desdits canaux de signalisation (*CS*) et/ou de données (*CD*), pendant lesdites phases d'échanges de données de signalisation et/ou de données multimédias.

L'invention concerne aussi une carte à puce comprenant des moyens de traitement d'information et des moyens de stockage d'information et destinée à coopérer avec un terminal muni d'un lecteur de carte à puce, de manière à former un premier système d'abonné pour la gestion de transmissions de données multimédias via un réseau de type Internet entre ledit premier système d'abonné et un second système d'abonné, ladite gestion comprenant au moins une phase d'échange de données dites de signalisation, via un canal dit de signalisation, à l'aide d'un protocole de signalisation déterminé, et une phase d'échange desdites données multimédias, via un canal dit de données, à l'aide d'un protocole de communication déterminé, caractérisée en ce que ladite carte à puce (2*a*) comporte, dans les moyens de stockage d'information, une pièce de logiciel (23*a*), formant une couche protocolaire de communication spécifique, comprenant en outre au moins une première entité logicielle autonome ($S_1$), de type dit client, et une deuxième entité logicielle autonome ($S_2$), de type dit serveur, lesdites entités ($S_2$, $S_2$) coopérant de manière à ce que ladite carte à puce (2*a*) offre la fonctionnalité d'un client/serveur de type "WEB" et à permettre l'établissement des échanges de données entre le terminal (1*a*) dudit premier système d'abonné et ledit second système d'abonné (1'*b*) via ledit réseau de type Internet (*RI*) ; et en ce que ladite carte à puce (2*a*) comprend en outre, dans les moyens de stockage d'information, une pièce de logiciel applicative de caractéristiques fonctionnelles déterminées, dite filtre (28), recevant et/ou émettant des unités de données de protocole vers lesdites et/ou à partir desdites première et deuxième entités logicielles autonomes ($S_2$, $S_1$), de types respectifs client et serveur, comprises dans ladite pièce de logiciel spécifique (23*a*) ; ladite pièce applicative étant réalisée sous le contrôle de ladite entité logicielle autonome de type serveur ($S_1$) ; et en ce que ledit filtre (28) coopère, grâce auxdits moyens de traitement d'information, avec lesdites entités logicielles autonomes ($S_2$, $S_1$) de ladite seconde pièce de logiciel spécifique (23*a*) pour permettre l'ouverture de session avec lesdites entités logicielles autonomes ($T_2$, $T_1$) de ladite première pièce de logiciel spécifique pour former une fonction dite de "proxy " (27*a*) et contrôler des caractéristiques prédéterminées des échanges de données transitant entre ledit premier système d'abonné (1*a*, 2*a*) et ledit second système d'abonné (1'b), via au moins l'un desdits canaux de signalisation (*CS*) et/ou de données (*CD*), pendant lesdites phases d'échanges de données de signalisation et/ou de données multimédias.

## Revendications

1. Procédé de gestion de transmissions de données multimédias via un réseau de type Internet entre un premier système d'abonné et un second système d'abonné comprenant au moins une phase d'échange de données dites de signalisation, via un canal dit de signalisation, à l'aide d'un protocole de signalisation déterminé, et une phase d'échange desdites données multimédias, via un canal dit de données, à l'aide d'un protocole de communication déterminé, **caractérisé en ce que**, au moins ledit premier système d'abonné comportant un terminal muni d'un navigateur de type "WEB" et d'un lecteur de carte à puce coopérant avec une carte à puce, ladite carte à puce (2*a*) comportant une première pièce de logiciel (23*a*), formant une couche protocolaire de communication spécifique et ledit terminal (1*a*) comportant une seconde pièce de logiciel (13), formant une couche protocolaire de communication spécifique et formant interface avec au moins ledit navigateur de type "WEB" (10) ; lesdites première et seconde pièces de logiciel (13, 23*a*) comprennent chacune en outre au moins une première entité logicielle autonome ($T_2$, $S_1$), de type dit client, et une deuxième entité logicielle autonome ($T_1$, $S_2$), de type dit serveur, lesdites entités ($T_1$, $S_2$, $T_1$, $S_2$) coopérant de manière à permettre l'établissement de sessions d'échanges de données bidirectionnels entre ledit terminal (1*a*) et ladite carte à puce (2*a*) et à ce que ladite carte à puce (2*a)* offre la fonctionnalité d'un client/serveur de type "WEB", et à permettre l'établissement d'une session d'échanges de données bidirectionnels entre le terminal (1*a*) dudit premier système d'abonné et ledit second système d'abonné (1'*b*) via ledit réseau de type Internet (*RI*), lesdites entités logicielles autonomes communiquant au moyen d'unités de données de protocole prédéterminées ;

   - **en ce qu'**il comprend la réalisation, dans ladite carte à puce (2a), d'une pièce de logiciel applicative de caractéristiques fonctionnelles déterminées, dite filtre (28), recevant et/ou émettant des unités de données de protocole vers lesdites et/ou à partir desdites première et deuxième entités logicielles autonomes ($S_2$, $S_1$), de types respectifs client et serveur, comprises dans ladite seconde pièce de logiciel spécifique (23*a*) ; la réalisation de ladite pièce applicative étant sous le contrôle de ladite entité logicielle autonome de type serveur ($S_1$) ; et
   - **en ce que** ledit filtre (28) coopère avec lesdites entités logicielles autonomes ($S_2$, $S_1$) de ladite seconde pièce de logiciel spécifique (23*a*) pour ouvrir une session avec lesdites entités logicielles autonomes ($T_2$, $T_1$) de ladite première pièce de logiciel spécifique pour former une fonction dite de "proxy " (27*a*) et contrôler des caractéristiques prédéterminées des échanges de données transitant entre ledit premier système d'abonné (1*a*, 2*a)*

et ledit second système d'abonné (1'b), via au moins l'un desdits canaux de signalisation (*CS*) et/ou de données (*CD*), pendant lesdites phases d'échanges de données de signalisation et/ou de données multimédias.

**2.** Procédé selon la revendication 1, **caractérisé en ce que** lesdites entités logicielles autonomes sont constituées par des agents intelligents ($T_2$, $T_1$, $S_2$, $S_1$).

**3.** Procédé selon la revendication 2, **caractérisé en ce que** chacun desdits agents intelligents ($T_2$, $T_1$, $S_2$, $S_1$) est associés à au moins l'une des six propriétés suivantes :

    - "hôte" : agent intelligent localisé dans ledit terminal (1) ;
    - "carte" : agent intelligent localisé dans ladite carte à puce (2*a*) ;
    - "local" : agent intelligent ne communiquant pas avec ledit réseau (*RI*) ;
    - "réseau" : agent intelligent communiquant avec ledit réseau (*RI*) ;
    - "client" : agent intelligent qui initialise une desdites sessions ; et
    - "serveur" : agent intelligent qui reçoit une demande pour une desdites sessions.

**4.** Procédé selon la revendication 3, **caractérisé en ce que** ladite première pièce de logiciel spécifique comprend un premier agent intelligent ($T_1$) associé auxdites propriétés "terminal", "serveur" et "local", dit $T_1$, réalisant la fonction d'un serveur de type "TCP/IP", **en ce que** ladite seconde pièce de logiciel spécifique comprend un premier agent intelligent ($S_1$) associé auxdites propriétés "carte", "serveur" et "local", dit $S_1$, cet agent $S_1$ étant associé par une session audit premier agent intelligent $T_1$, **en ce que** lesdites caractéristiques fonctionnelles déterminées dudit filtre (28) sont fonctions d'informations en provenance dudit premier agent intelligent $T_1$, **en ce que** ladite première pièce de logiciel spécifique comprend un deuxième agent intelligent ($T_2$) associé auxdites propriétés "terminal", "serveur" et "réseau", dit $T_2$, réalisant la fonction d'un serveur de type "TCP/IP" ou "UDP/IP", pour être connecté audit second système d'abonné (1'*b*) via ledit réseau de type Internet (*RI*), et **en ce que** ladite seconde pièce de logiciel spécifique (23*a*) comprend un deuxième agent intelligent ($S_2$) associé auxdites propriétés "carte", "client" et "local", dit $S_2$, une instance de cet agent intelligent $S_2$ étant créée à chacune des dites sessions de manière dynamique par ledit filtre (28) et cet agent $S_2$ ouvrant des sessions avec ledit deuxième agent intelligent $T_2$ et lui indiquant une adresse permettant de se connecter audit second système d'abonné (1'*b*), de manière à ce que lesdits agents intelligents ($T_2$, $T_1$, $S_2$, $S_1$) et ledit filtre (28) coopèrent pour former ladite fonction de "proxy TCP" (27*a*) et contrôlent lesdites caractéristiques des échanges de données entre ledit premier système d'abonné (*Aa*) et ledit second système d'abonné (*Ab*), via lesdits canaux de signalisation (*CS*) et/ou de données (*CD*).

**5.** Procédé selon la revendication 1, **caractérisé en ce que** ladite fonction "proxy" contrôle lesdites caractéristiques desdites données de signalisation transitant sur ledit canal de signalisation, **en ce que** le terminal (1*a*) dudit premier système d'abonné et ledit second système d'abonné (1'*b*) comprenant une pièce de logiciel spécifique (902*a*, 902*b*), dite de signalisation, associée à un port de type "TCP", dit de signalisation, désigné par un numéro de port prédéterminé, il comprend au moins les étapes suivantes :

    - établissement d'un session d'échange bidirectionnels entre le terminal (1*a*) dudit premier système d'abonné, dit appelant, et ladite carte à puce (2*a*) qui lui est associée, par mise en oeuvre d'un serveur de type "TCP", de manière à appeler ladite carte à puce (2a) sur une adresse de type "URL" dite de rebouclage ;
    - appel dudit second système d'abonné (1'*b*), dit appelé, par ladite carte à puce (2*a*), via ledit réseau Internet (*RI*), sur une adresse de type "URL" constituée d'une adresse de type "IP" désignant ledit abonné appelé (*Ab*), déterminée pendant la dite phase de localisation, et dudit numéro de port de signalisation ;
    - et transmission desdites données de signalisation sur ledit canal de signalisation (*CS*) au travers dudit "proxy" (27*a*) et via ledit réseau Internet (*RI*).

**6.** Procédé selon la revendication 5, **caractérisé en ce que** ledit système d'abonné appelé comportant un terminal (1*b*) dans lequel est implanté ladite seconde pièce de logiciel et coopérant avec une carte à puce (2*b*) dans laquelle est implantée ladite seconde pièce de logiciel et ladite pièce de logiciel applicative pour former ledit "proxy" (27*b*), il comprend les étapes supplémentaires suivantes :

    - appel de la carte à puce (2*b*) dudit système d'abonné appelé par la carte à puce (2*a*) dudit système appelant; et
    - communication entre la carte à puce (2*b*) du terminal (1*b*) dudit système appelé et ce terminal, au travers dudit "proxy" associé à cette carte à puce.

**7.** Procédé selon la revendication 5, **caractérisé en ce que** ledit contrôle de caractéristiques prédéterminées des échanges desdites données de signalisation comprend une étape de simple ou de mutuelle authentification entre lesdits abonnés appelant (*Aa*) et appelé (*Ab*) effectuée par lesdits "proxys" (27*a*, 27*b*).

8. Procédé selon la revendication 5, **caractérisé en ce que** ledit contrôle de caractéristiques prédéterminées des échanges desdites données de signalisation comprend une étape de négociation de réservation d'un chemin de routage à emprunter par lesdites données pendant la dite phase d'échange de données, effectuée par lesdits "proxys" (27*a*, 27*b*).

9. Procédé selon la revendication 1, **caractérisé en ce que**, ladite fonction "proxy" (27*a*) contrôle lesdites données multimédias transitant sur ledit canal de donnés (*CD*), **en ce que** le terminal (1*a*) dudit premier système d'abonné et ledit second système d'abonné (1'*b*) comprenant une pièce de logiciel spécifique (905*a*, 905*b*), dite de d'échange de données, associée à un port de type "UDP", dit de données, désigné par un numéro de port prédéterminé, il comprend au moins les étapes suivantes :

   - établissement d'un session d'échange bidirectionnels entre le terminal (1*a*) dudit premier système d'abonné, dit appelant, et ladite carte à puce (2*a*) qui lui est associé, par mise en oeuvre d'un serveur de type "UDP", de manière à appeler ladite carte à puce (2*a*) sur une adresse de type "URL" dite de rebouclage ;
   - appel dudit second système d'abonné (1'*b*), dit appelé, par ladite carte à puce (2*a*), via ledit réseau Internet (*RI*), sur une adresse de type "URL" constituée d'une adresse de type "IP" désignant ledit abonné appelé (*Ab*), déterminée pendant la dite phase de localisation, et dudit numéro de port de signalisation ;
   - et transmission desdites données multimédias sur ledit canal de données (*CD*) au travers dudit "proxy" (27*a*) et via ledit réseau Internet (*RI*).

10. Procédé selon la revendication 9, **caractérisé en ce que** ledit système d'abonné appelé comportant un terminal (1*b*) dans lequel est implanté ladite seconde pièce de logiciel et coopérant avec une carte à puce (2*b*) dans laquelle est implantée ladite seconde pièce de logiciel et ladite pièce de logiciel applicative pour former ledit "proxy" (27*b*), il comprend les étapes supplémentaires suivantes :

   - appel de la carte à puce (2*b*) dudit système d'abonné appelé par la carte à puce (2*a*) dudit système appelant; et
   - communication entre la carte à puce (2*b*) du terminal (1*b*) dudit système appelé et ce terminal, au travers dudit "proxy" (27*b*) associé à cette carte à puce (2*b*).

11. Procédé selon la revendication 5, **caractérisé en ce qu'**il comprend en outre une phase d'enregistrement desdits abonnés dans au moins un serveur d'annuaire (*SA$_i$*), à l'aide d'un protocole d'enregistrement déterminé (900*a*) et de données dites de profil d'abonné (903*a*) décrivant lesdits abonnés, une phase de localisation dudit abonné appelé par interrogation d'au moins un desdits serveurs d'annuaire (*SA$_i$*), à l'aide d'un protocole de localisation déterminé (901*a*), lesdits protocoles déterminés d'enregistrement et de localisation étant associés à des pièces de logiciel (*A$_e$, A$_l$*), au moins l'une desdites pièces de logiciel est stockée dans au moins la carte à puce (2*a*) dudit premier système d'abonné, **en ce que** ladite carte à puce (2*a*) comprend au moins une deuxième entité logicielle (*AT$_e$, AT$_l$*), apte à interpréter une suite d'instructions et à la traduire en une suite d'ordres, de manière à coopérer avec ladite seconde pièce de logiciel spécifique (23*a*) pour que ladite carte à puce offre une fonctionnalité d'interface passerelle dite "CGI", la dite carte à puce comprenant au moins une desdites suites d'instructions associée à au moins une pièce de logiciel propriétaire ;
   et **en ce qu'**il comprend au moins les étapes suivantes :

   1/ ouverture d'une première séquence d'échanges de données entre au moins ledit terminal (1) et ladite carte à puce (2*a*), pour la transmission d'une requête pour que ledit navigateur "WEB" (10) récupère des données permettant de sélectionner et d'activer une desdites pièces de logiciel (*A$_e$, A$_l$*), en vue de la sélection d'un desdits serveurs d'annuaire (*SA$_i$*) ;
   2/ ouverture d'une deuxième séquence d'échanges de données entre ladite carte à puce (2*a*) et ledit terminal (1) pour lui transmettre lesdites données ;
   2/ ouverture d'une troisième séquence d'échanges de données entre ledit terminal (1) et ladite carte à puce (2*a*) pour transmettre des données de sélection et des paramètres optionnels, lesdites données et lesdits paramètres optionnels comportant une référence à une desdites suites d'instructions associées à ladite pièce de logiciel propriétaire ;
   4/ interprétation de cette dite suite d'instructions, par mise en oeuvre de ladite fonctionnalité "CGI" et exécution de ladite pièce de logiciel propriétaire (*A$_e$, A$_l$*); et
   5/ en résultat de ladite exécution, ouverture d'une quatrième séquence d'échanges de données entre ladite carte à puce (2*a*) et un desdits serveurs d'annuaire (*SA$_i$*), sélectionné lesdites données de sélection, de manière à transmettre une requête pour la réalisation d'une opération déterminée d'enregistrement ou de localisation.

**12.** Procédé selon la revendication 1, **caractérisé en ce que** lesdites données multimédias sont des données téléphoniques, **en ce que** ladite suite d'instructions à interpréter associée à chacune desdites pièces de logiciel propriétaire est constituée par un script, et **en ce que** ladite deuxième entité logicielle est constituée par un module logiciel dit agent intelligent traducteur de script (*AT$_e$, AT$_l$*) fournissant des ordres compréhensibles par lesdites pièces de logiciel (*A$_e$, A$_l$*),.

**13.** Procédé selon la revendication 11, **caractérisé en ce que** ladite étape 1/ comprend l'émission d'une requête de type dit "HTTP" selon un protocole de type Internet par adressage d'une page déterminée (*P$_1$, P$_2$*) en langage "HTML" contenant lesdites données de sélection et des paramètres optionnels, ladite adresse étant une adresse de type "URL" de rebouclage sur ladite carte à puce (2*a*).

**14.** Procédé selon la revendication 11, **caractérisé en ce qu'**une pièce de logiciel dite d'un premier type (*A$_e$*) est associée au dit protocole permettant l'enregistrement d'un des dits abonnés (*Aa, Ab*) sur un serveur d'annuaire déterminé (*SA$_i$*), **en ce que** lesdits paramètres optionnels sont constitués par des données définissant un profil dit d'abonné, comprenant au moins des données dites d'identification dudit abonné à enregistrer (*Aa, Ab*), et **en ce que** ladite requête "HTTP" de ladite étape 3/ comprend des premières données indiquant que l'opération demandée est ledit enregistrement et des deuxièmes données permettant d'élaborer, par ladite pièce de logiciel de premier type (*A$_e$*), une adresse de type "URL" caractéristique dudit serveur d'annuaire déterminé (*SA$_i$*), et **en ce que** des données associées au dit profil d'abonné sont transmises, pendant ladite étape 4/, à ce serveur d'annuaire (*SA$_i$*), de manière à réaliser ledit enregistrement dudit abonné (*Aa, Ab*), ledit enregistrement comprenant la détermination d'une adresse de type "IP" par association de ladite adresse de serveur d'annuaire (*SA$_i$*) et desdites données d'identification de cet abonné (*Aa, Ab*).

**15.** Procédé selon la revendication 11, **caractérisé en ce qu'**une pièce de logiciel dite d'un second type (*A$_l$*) est associée au dit protocole permettant la localisation d'un abonné *(Ab)* dit appelé sur ledit réseau de type Internet (*RI*), ledit abonné appelé (*Ab*) étant enregistré sur un serveur d'annuaire déterminé (*SA$_i$*), **en ce que** ce dit enregistrement comprend au moins des données dites d'identification dudit abonné appelé, **en ce que** ladite requête "HTTP" de ladite étape 3/ comprend des premières données indiquant que l'opération demandée est ladite localisation, des deuxièmes données identifiant ledit abonné appelé (*Ab*) à localiser et des troisièmes données permettant d'élaborer, par ladite pièce de logiciel propriétaire de second type (*A$_l$*), une adresse de type "URL" caractéristique dudit serveur d'annuaire déterminé (*SA$_i$*), et **en ce que** des données identifiant ledit abonné appelé sont transmises, pendant ladite étape 4/ à ce serveur d'annuaire (*SA$_i$*), de manière à réaliser ladite phase de localisation dudit abonné appelé, par la recherche d'une adresse de type "IP", en associant lesdites données d'identification de ce abonné appelé, reçues par ledit serveur d'annuaire (*SA$_i$*), à des données d'enregistrement stockées dans celui-ci, et la retransmission de ladite adresse de type "IP" à ladite carte à puce (2*a*), de manière à permettre ladite localisation.

**16.** Carte à puce destinée à coopérer avec un terminal muni d'un lecteur de carte à puce, de manière à former un premier système d'abonné pour la gestion de transmissions de données multimédias via un réseau de type Internet entre ledit premier système d'abonné et un second système d'abonné, ladite gestion comprenant au moins une phase d'échange de données dites de signalisation, via un canal dit de signalisation, à l'aide d'un protocole de signalisation déterminé, et une phase d'échange desdites données multimédias, via un canal dit de données, à l'aide d'un protocole de communication déterminé, **caractérisée en ce que** ladite carte à puce (2*a*) comporte une pièce de logiciel (23*a*), formant une couche protocolaire de communication spécifique, comprenant en outre au moins une première entité logicielle autonome (S$_1$), de type dit client, et une deuxième entité logicielle autonome (S$_2$), de type dit serveur, lesdites entités (S$_2$, S$_2$) coopérant de manière à ce que ladite carte à puce (2*a*) offre la fonctionnalité d'un client/serveur de type "WEB" et à permettre l'établissement des échanges de données entre le terminal (1*a*) dudit premier système d'abonné et ledit second système d'abonné (1'*b*) via ledit réseau de type Internet (*RI*) ; et **en ce que** ladite carte à puce (2*a*) comprend en outre une pièce de logiciel applicative de caractéristiques fonctionnelles déterminées, dite filtre (28), recevant et/ou émettant des unités de données de protocole vers lesdites et/ou à partir desdites première et deuxième entités logicielles autonomes (S$_2$, S$_1$), de types respectifs client et serveur, comprises dans ladite pièce de logiciel spécifique (23*a*) ; ladite pièce applicative étant réalisée sous le contrôle de ladite entité logicielle autonome de type serveur (S$_1$) ; et **en ce que** ledit filtre (28) coopère avec lesdites entités logicielles autonomes (S$_2$, S$_1$) de ladite seconde pièce de logiciel spécifique (23*a*) pour permettre l'ouverture de session avec lesdites entités logicielles autonomes (T$_2$, T$_1$) de ladite première pièce de logiciel spécifique pour former une fonction dite de "proxy " (27*a*) et contrôler des caractéristiques prédéterminées des échanges de données transitant entre ledit premier système d'abonné (1*a*, 2*a*) et ledit second système d'abonné (1'b), via au moins l'un desdits canaux de signalisation (*CS*) et/ou de données (*CD*), pendant lesdites phases d'échanges de données de signalisation et/ou de données multimédias.

**17.** Carte à puce selon la revendication 16, **caractérisé en ce que**, ladite gestion de transmissions de données multimédias comprenant en outre une phase d'enregistrement desdits abonnés dans au moins un serveur d'annuaire (*SA$_i$*), à l'aide d'un protocole d'enregistrement déterminé (900*a*) et de données dites de profil d'abonné (903*a*) décrivant lesdits abonnés, une phase de localisation dudit abonné appelé par interrogation d'au moins un desdits serveurs d'annuaire (*SA$_i$*), à l'aide d'un protocole de localisation déterminé (901*a*), ladite carte à puce (2*a*) stocke au moins une pièce de logiciel (*A$_e$, A$_l$*) associée aux dits protocoles déterminés d'enregistrement et de localisation, et **en ce que** ladite carte à puce (2*a*) comprend au moins une deuxième entité logicielle (*AT$_e$, AT$_l$*) coopérant avec ladite pièce de logiciel spécifique (23*a*) pour que ladite carte à puce (2*a*) offre une fonctionnalité d'interface passerelle dite "CGI", de manière à activer lesdites pièces de logiciel (*A$_e$, A$_l$*) associées aux dits protocoles d'enregistrement ou de localisation.

## Claims

**1.** A method for managing transmissions of multimedia data via an internet-type network between a first subscriber system and a second subscriber system including at least one phase of signaling data exchange, via a signaling channel, with the aid of a predetermined signaling protocol, and a phase of exchanging said multimedia data via a data channel, with the aid of a predetermined communication protocol, **characterized in that** at least said first subscriber system includes a terminal provided with a web-type navigator and a smart card reader that cooperate via a smart card, said smart card (2a) including a first item of software (23a), forming a specific communication protocol layer, and said terminal (1a) including a second item of software (13), forming a specific communication protocol layer and forming an interface with at least said web-type navigator (10); said first and second items of software (13, 23a) further include at least a first autonomous software entity ($T_2$, $S_1$) of the client type and a second autonomous software entity ($T_1$, $S_2$) of the server type, said entities ($T_1$, $S_2$, $T_1$, $S_2$) cooperating in such a way as to enable to establishment of bidirectional data exchange sessions between said terminal (1a) and said smart card (2a), and that said smart card (2a) offers the function of a client/web server, and to enable to establishment of a bidirectional data exchange between the terminal (1a) of said first subscriber system and said second subscriber system (1'b) via said internet-type network (RI), said autonomous software entities communicating by means of predetermined protocol data units;

  - that it includes the embodiment, in said smart card (2a), of an item of applications software of predetermined functional characteristics, known as a filter (28), which receives and/or sends protocol data units to and/or from said first and second autonomous software entities ($S_2$, $S_1$) of the client and server type, respectively, which are included in said second specific item of software (23a), the embodiment of said applications item being under the control of said autonomous software entity of the server type ($S_1$); and
  - that said filter (28) cooperates with said autonomous software entities ($S_2$, $S_1$) of said second specific item of software (23a) to open a session with said autonomous software entities ($T_2$, $T_1$) of said first specific item of software in order to form a function known as "proxy" (27a) and to control predetermined characteristics of data exchanges that pass between said first subscriber system (1a, 2a) and said second subscriber system (1'b), via at least one of said signaling channels (CS) and/or data channels (CD), during said phases of exchanging signaling data and/or multimedia data.

**2.** The method of claim 1, **characterized in that** said autonomous software entities comprise intelligent agents ($T_2$, $T_1$, $S_2$, $S_1$).

**3.** The method of claim 2, **characterized in that** each of said intelligent agents ($T_2$, $T_1$, $S_2$, $S_1$) is assigned at least one of the following six properties:

  - "host": intelligent agent located in said terminal (1);
  - "card": intelligent agent located in said smart card (2a);
  - "local": intelligent agent not communicating with said network (RI);
  - "network": intelligent agent communicating with said network (RI);
  - "client": intelligent agent which initializes one of said sessions; and
  - "server": intelligent agent receives a request for one of said sessions.

4. The method of claim 3, **characterized in that** said first specific item of software includes a first intelligent agent $(T_1)$ assigned said properties of "terminal", "server" and "local", or $T_1$, performing the function of a server of the TCP/IP type, and that said second specific item of software includes a first intelligent agent $(S_1)$ assigned said properties of "card", "server" and "local", or $S_1$, this agent $S_1$ being associated by a session with said first intelligent agent $T_1$, that said predetermined functional characteristics of said filter (28) are functions involving information originating in said first intelligent agent $T_1$, that said first specific item of software includes a second intelligent agent $(T_2)$ assigned said properties of "terminal", "server" and "network", or $T_2$, performing the function of a server of the TCP/IP or UDP/IP type, in order to be connected to said second subscriber system (1'b) via said internet-type network (RI), and that second specific item of software (23a) includes a second intelligent agent $(S_2)$ assigned said properties of "card", "client" and "local", or $S_2$, an instant of this intelligent agent $S_2$ being created in each of said sessions dynamically by said filter (28), and this agent $S_2$ opening sessions with said second intelligent agent $T_2$ and telling it an address enabling it to connect to said second subscriber system (1'b), in such a way that said intelligent agents $(T_2, T_1, S_2, S_1)$ and said filter (28) cooperate to form said proxy TCP function (27a) and control said data exchange characteristics between said first subscriber system (Aa) and said second subscriber system (Ab) via said signaling channels (CS) and/or data channels (CD).

5. The method of claim 1, **characterized in that** said proxy function controls said characteristics of said signaling data traveling on said signaling channel, that the terminal (1 a) of said first subscriber system and said second subscriber system (1'b), including a specific item of software (902a, 902b) or signaling item of software, assigned to a port of the TCP type or signaling port, designated by a predetermined port number, the method including at least the following steps:

- establishment of a bidirectional exchange session between the terminal (1 a) of said first subscriber system or caller, and said smart card (2a) with which it is associated, by using a server of the TCP type, in such a way as to call said smart card (2a) at a URL address known as a wrap-around;
- calling said subscriber system (1'b) or called party, done by said smart card (2a) via said internet-type network (RI) at a URL address comprising an address of the IP type, designating said called subscriber (Ab), determined during said locating phase, and said signaling port number;
- and transmission of said signaling data over said signaling channel (CS) through said proxy (27a) and via said internet-type network (RI).

6. The method of claim 5, **characterized in that** said called subscriber system includes a terminal (1b) in which said second item of software is implanted and cooperates with a smart card (2b) into which said second item of software and said applications item of software are implanted to form said proxy (27b), the method including the following additional steps:

- calling said smart card (2b) of said called subscriber system by the smart card (2a) of said caller system; and
- communication between the smart card (2b) of the terminal (1 b) of said called system and this terminal, through said proxy associated with said smart card.

7. The method of claim 5, **characterized in that** said control of predetermined characteristics of exchanges of said signaling data includes a step of simple or mutual authentication between said caller subscriber (Aa) and called subscriber (Ab), performed by said proxies (27a, 27b).

8. The method of claim 5, **characterized in that** said control of predetermined characteristics of exchanges of said signaling data includes a step of negotiating a reservation for a routing path to be taken by said data during said data exchange phase, performed by said proxies (27a, 27b).

9. The method of claim 1, **characterized in that** said proxy function (27a) controls said multimedia data travelling on said data channel (CD), that the terminal (1 a) of said first subscriber system and said second subscriber system (1'b) including a specific item of software (905a, 905b) known as a data exchange item of software, assigned to a port of the UDP or data type, designated by a predetermined port number, the method including at least the following steps:

- establishment of a bidirectional exchange session between the terminal (1 a) of said first subscriber system or caller, and said smart card (2a) with which it is associated, by using a UDP-type server, in such a way as to call said smart card (2a) at a URL address known as a wrap-around;
- calling said subscriber system (1'b) or called party, by said smart card (2a) via said internet-type network (RI) at a URL address comprising an address of the IP type, designating said called subscriber (Ab), determined during said locating phase, and said signaling port number;
- and transmission of said multimedia data over said data channel (CD) through said proxy (27a) and via said internet-type network (RI).

10. The method of claim 9, **characterized in that** said called subscriber system includes a terminal (1 b) in which said second item of software is implanted and cooperates with a smart card (2b) into which said second item of software and said applications item of software are implanted to form said proxy (27b), the method including the following additional steps:

- calling said smart card (2b) of said called subscriber system by the smart card (2a) of said caller system; and
- communication between the smart card (2b) of the terminal (1 b) of said called system and this terminal, through said proxy associated with said smart card (2b).

11. The method of claim 5, **characterized in that** it further includes a phase of listing said subscribers in at least one directory server ($SA_i$), with the aid of a predetermined listing protocol (900a) and what are called subscriber profile data (903a) that describes said subscribers, a phase of locating said called subscriber by consulting at least one of said directory servers ($SA_i$), using a predetermined locating protocol (901 a), said predetermined listing and locating protocols being assigned to items of software ($A_e$, $A_l$), at least one of said items of software being stored in at least the smart card (2a) of said first subscriber system, that said smart card (2a) includes at least a first software entity ($AT_e$, $AT_l$) capable of interpreting a set of instructions and translating them into a set of orders, in such a way as to cooperate with said second specific item of software (23a) so that said smart card will offer a gateway interface function or CGI, said smart card including at least one of said sets of instructions associated with at least one item of proprietary software;
and that includes at least the following steps:

1) opening a first sequence of data exchanges between at least said terminal (1) and said smart card (2a), for the transmission of a request for said web navigator (10) to retrieve data enabling the selection and activation of one of said items of software ($A_e$, $A_l$), with a view to selecting one of said directory servers ($SA_i$);
2) opening a second sequence of data exchanges between said smart card (2a) and said terminal (1) in order to transmit said data to the terminal;
3) opening a third sequence of data exchanges between said terminal (1) and said smart card (2a) to transmit selection data and optional parameters, said data and optional parameters including a reference to one of said sets of instructions associated with said item of proprietary software;
4) interpretation of said set of instructions by using said CGI function and execution of said item of proprietary software ($A_e$, $A_l$); and
5) as a result of said execution, opening a fourth sequence of data exchanges between said smart card (2a) and one of said directory servers ($SA_i$), selected said selection data, in such a way as to transmit a request to perform a predetermined listing or locating operation.

12. The method of claim 1, **characterized in that** said multimedia data are telephone data, that said set of instructions to be interpreted, associated with each of said items of proprietary software, comprises a script, and that said second software entity comprises a software module known as an intelligent script translator agent ($AT_e$, $AT_l$) that furnishes orders that are comprehensible to said items of software ($A_e$, $A_l$),

13. The method of claim 11, **characterized in that** said step 1) includes sending an http request by an internet-type protocol, by addressing a predetermined page ($P_1$, $P_2$) in HTML language, containing said selection data and optional parameters, said address being a URL wrap-around address for said smart card (2a).

14. The method of claim 11, **characterized in that** an item of software called a first type ($A_e$) is associated with said protocol enabling the listing of one of said subscribers (Aa, Ab) in a predetermined directory server ($SA_i$), that said optional parameters comprise data that define what is called a subscriber profile, including at least data known as identification data of said subscriber to be recorded (Aa, Ab), and that said http request in said step 3) includes first data, indicating that the operation requested is said listing, and second data, making it possible by said item of software of the first type ($A_e$) to develop an address of the URL type that is characteristic of said predetermined directory server ($SA_i$), and that the data associated with said subscriber profile are transmitted, during said step 4), to this directory server ($SA_i$), in such a way as to perform said listing of said subscriber (Aa, Ab), said listing including the determination of an IP-type address by association of said directory server ($SA_i$) address and said identification data of this subscriber (Aa, Ab).

**15.** The method of claim 11, **characterized in that** a item of software of a second type ($A_l$) is associated with said protocol making it possible to locate a subscriber (Ab) or called party in said internet-type network (RI), said called subscriber (Ab) being recorded on a predetermined directory server ($SA_i$), that this listing includes at least data known as identification data for said called subscriber, that said http request of said step 3) includes first data indicating that the operation requested is said locating operation, second data identifying said called subscriber (Ab) to be located, and third data making it possible, by said item of proprietary software of the second type ($A_l$), to develop an address of the URL type that is characteristic of said predetermined directory server ($SA_i$), and that data identifying said called subscriber or transmitted, during said step 4), to said directory server ($SA_i$), in such a way as to perform said phase of locating said called subscriber by looking for an IP address, by associating said identification data for this called subscriber, which are received by said directory server ($SA_i$), with listing data stored in the server, and retransmitting said IP address to said smart card (2a) in such a way as to enable said locating operation.

**16.** A smart card intended to cooperate with a terminal provided with a smart card reader, in such a way as to form a first subscriber system for managing transmissions of multimedia data via an internet-type network between said first subscriber system and a second subscriber system, said management including at least one phase of exchanging data called signaling data, via a signaling channel, with the aid of a predetermined signaling protocol, and a phase of exchanging said multimedia data via a data channel, with the aid of a predetermined communication protocol, **characterized in that** said smart card (2a) includes an item of software (23a), forming a specific communication protocol layer, further including at least one first autonomous software entity ($S_1$), of the client type, and a second autonomous software entity ($S_2$) of the server type, said entities ($S_2$, $S_2$) cooperating in such a way that said smart card (2a) offers the function of a client/webserver and so as to enable the establishment of data exchanges between the terminal (1 a) of said first subscriber system and said second subscriber system (1'b) via said internet-type network (RI); and that said smart card (2a) further includes an item of applications software of predetermined functional characteristics, called a filter (28), which receives and/or sends protocol data units from and/or to said first and second autonomous software entities ($S_2$, $S_1$), of the client and server types, respectively, that are included in said specific item of software (23a); said applications item being embodied under the control of said autonomous software entity of the server type ($S_1$); and that said filter (28) cooperates with said autonomous software entities ($S_2$, $S_1$) of said second specific item of software (23a) to enable the opening of a session between said autonomous software entities ($T_2$, $T_1$) of said first specific item of software to form a function called a proxy (27a) and to control predetermined characteristics of the data exchanges traveling between said first subscriber system (1a, 2a) and said second subscriber system (1'b), via at least one of said signaling channels (CS) and/or data channels (CD), during said phases of exchanging signaling data and/or multimedia data.

**17.** The smart card of claim 16, **characterized in that**, with said management of multimedia data transmissions further including a phase of listing said subscribers in at least one directory server ($SA_i$), with the aid of a predetermined listing protocol (900a) and what are called subscriber profile data (903a) describing said subscribers, a phase of locating said called subscriber by consulting at least one of said directory servers ($SA_i$), with the aid of a predetermined locating protocol (901 a), said smart card (2a) stores at least one item of software ($A_e$, $A_l$) associated with said predetermined listing and locating protocols, and that said smart card (2a) includes at least one second software entity ($AT_e$, $AT_l$) cooperating with said specific item of software (23a) so that said smart card (2a) will offer a gateway interface function or CGI, in such a way as to activate said items of software ($A_e$, $A_l$) associated with said listing or locating protocols.

**Patentansprüche**

**1.** Verwaltungsverfahren für die Übertragung von Multimediadaten, über ein Netzwerk der Art Internet, zwischen einem ersten Teilnehmersystem und einem zweiten Teilnehmersystem, das mindestens eine Datenaustauschphase von sogenannten Signalisierungsdaten, über einen genannten Signalisierungskanal, mit Hilfe eines bestimmten Signalisierungsprotokolls, sowie eine Datenaustauschphase der sogenannten Multimediadaten, über einen sogenannten Datenkanal, mit Hilfe eines bestimmten Vermittlungsprotokoll umfasst, das **dadurch gekennzeichnet ist, dass** mindestens das genannte erste Teilnehmersystem ein Endgerät, das mit einem Navigator der Art "WEB" und einem Chipkartenleser ausgestattet ist, der mit einer Chipkarte zusammenwirkt aufweist, wobei diese Chipkarte (2a) einen ersten Softwareteil (23a) aufweist, der eine spezifische Vermittlungsprotokollschicht bildet, und wobei dieses Endgerät (1a) einen zweiten Softwareteil (13) aufweist, der eine spezifische Vermittlungsprotokollschicht, sowie eine Schnittstelle mit mindestens dem genannten Navigator der Art "WEB" (10) bildet; wobei die genannten erster und zweiter Softwareteile (13, 23a), jeweils außerdem mindestens eine erste selbstständige Softwaregesamtheit ($T_2$, $S_1$), der genannten "Clienten-Art" und eine zweite selbstständige Softwaregesamtheit ($T_1$, $S_2$), der genannten "Server-Art" umfassen, wobei die genannten Gesamtheiten ($T_1$, $S_2$, $T_1$, $S_2$) derart zusammenwirken, dass sie den Aufbau von Datenaustauschsitzungen für einen bidirektionalen Datenaustausch zwischen dem genannten Endgerät (1a) und der genannten Chipkarte (2a) ermöglichen und dass die genannte Chipkarte (2a) die Funktionalität eines Clienten/Servers der Art "WEB" bietet, und dass sie den Aufbau einer Datenaustauschsitzung, für einen bidirektionalen Datenaustausch zwischen dem Endgerät (1a) des genannten ersten Teilnehmersystems und des genannten zweiten Teilnehmersystems (1'b) über das genannte Netzwerk der Art Internet (RI) ermöglichen, wobei die genannten selbstständigen Softwaregesamteinheiten mittels vorbestimmten Protokolldateneinheiten miteinander in Verbindung sind;

- dass es die Ausführung in der genannten Chipkarte (2a), eines Softwareteils für die Anwendung von bestimmten Funktionseigenschaften, sogenannte Filter (28) umfasst, die Protokolldateneinheiten von und /oder zu den genannten erste und zweite unabhängigen Softwaregesamtheiten ($S_2$, $S_1$), der jeweiligen Clienten und Serverart, die in dem genannten zweiten spezifischen Softwareteil (23a) enthalten sind empfangen und/oder senden; wobei die Ausführung des genannten Anwendungsteils unter Kontrolle der genannten unabhängigen Softwaregesamtheit der Server-Art ($S_1$) erfolgt; und

dass der genannte Filter (28) mit den genannten unabhängigen Softwaregesamtheiten ($S_2$, $S_1$) des genannten spezifischen zweiten Softwareteils (23a) zusammenwirkt, um mit den genannten unabhängigen Softwaregesamtheiten ($T_2$, $T_1$) des genannten ersten spezifischen Softwareteils eine Sitzung zu öffnen, um eine als "Proxy" (27a) bezeichnete Funktion durchzuführen und während den genannten Datenaustauschphasen von Signalisierungs- und/oder Multimediadaten, vorbestimmte Eigenschaften der Datenaustausche zu kontrollieren, die zwischen dem genannten ersten Teilnehmersystem (1a, 2a) und dem genannten zweiten Teilnehmersystem (1'b) über mindestens einen der genannten Signalisierungs- (CS) und/oder Datenkanäle (CD) stattfinden.

2. Verfahren nach Anspruch 1, **dadurch gekennzeichnet, dass** die genannten selbstständigen Softwaregesamtheiten durch intelligente Agenten ($T_2$, $T_1$, $S_2$, $S_1$) gebildet sind.

3. Verfahren nach Anspruch 2, **dadurch gekennzeichnet, dass** jeder der genannten intelligenten Agenten ($T_2$, $T_1$, $S_2$, $S_1$) mindestens einer der folgenden Eigenschaften zugeordnet ist

- "Host": intelligenter Agent, der sich im genannten Endgerät (1) befindet;
- "Karte": intelligenter Agent, der sich in der genannten Chipkarte (2a) befindet;
- "örtlich": intelligenter Agent, der nicht mit dem genannten Netzwerk (RI) in Verbindung steht;
- "Netzwerk": intelligenter Agent, der mit dem genannten Netzwerk (RI) in Verbindung steht;
- "Client": intelligenter Agent, der eine der genannten Sitzungen initialisiert; und -Server: intelligenter Agent, der einen Antrag für eine der genannten Sitzungen empfängt.

4. Verfahren nach Anspruch 3, **dadurch gekennzeichnet dass** der erste spezifische Softwareteil einen ersten intelligenten Agent (T1) umfasst, der den genannten Eigenschaften "Endgerät", "Server" und "örtlich" zugewiesen und T1 genannt wird, der die Funktion eines Servers der Art "TCP/IP" ausführt, und dass der genannte zweite spezifische Softwareteil einen ersten intelligenten Agent (S1) umfasst, der den genannten Eigenschaften "Karte", "Server" und "örtlich" zugewiesen und S1 genannt wird, wobei dieser Agent S1 über eine Sitzung dem ersten intelligenten Agenten T1 zugeordnet ist, dass die genannten bestimmten Funktionseigenschaften des genannten Filters (28) von Informationen abhängen, die vom ersten intelligenten Agenten T1 stammen, und dass der genannte erste spezifische Softwareteil einen zweiten intelligenten Agent (T2) umfasst, der den Eigenschaften "Endgerät", "Server" und "Netzwerk" zugewiesen und T2 genannt wird, der die Funktion eines Servers der Art "TCP/IP" oder "UDP/IP" ausführt, um über das genannte Netzwerk der Art Internet (RI) mit dem genannten zweiten Teilnehmersystem (1'b) in Verbindung zu stehen, und dass der genannte zweite spezifische Softwareteil (23a) einen zweiten intelligenten Agent (S2) umfasst, der den genannten Eigenschaften "Karte", "Client" und "örtlich" zugewiesen und S2 genannt wird, wobei eine Instanz dieses intelligenten Agenten S2 bei jeder der genannten Sitzungen dynamisch durch den genannten Filter (28) erzeugt wird, und dieser Agent S2 mit dem genannten zweiten intelligenten Agenten T2 Sitzungen öffnet, und ihm eine Adresse angibt, die es ihm ermöglicht, sich mit dem zweiten Teilnehmersystem (1'b) in Verbindung zu setzen, derart, dass die genannten intelligenten Agenten (T2, T1, S2, S1) und der genannte Filter (28) zusammenwirken, um die sogenannte "Proxy TCP"-Funktion (27a) auszuführen und die genannten Eigenschaften der Datenaustauschvorgänge zwischen dem genannten ersten Teilnehmersystem (Aa) und dem genannten zweiten Teilnehmersystem (Ab), über die genannten Signalisierungskanäle (CS) und/oder Datenkanäle (CD) kontrollieren.

5. Verfahren nach Anspruch 1, **dadurch gekennzeichnet, dass** die genannte "Proxy"-Funktion die genannten Eigenschaften der genannten Signalisierungsdaten kontrolliert, die über dem genannten Signalisierungskanal gefördert werden, und dass das Endgerät (1a) des genannten ersten Teilnehmersystems, und das genannten zweite Teilnehmersystem (1'b) einen spezifischen, Softwareteil das sogenannte Signalisierungsteil (902a, 902b) umfassen, der einem Port der Art "TCP", dem sogenannten Signalisierungsport zugeordnet ist, und dass er mindestens die folgenden Schritte umfasst:- Aufbau einer bidirektionalen Austauschsitzung zwischen dem Endgerät (1a) des genannten ersten Teilnehmersystems, der sogenannte Anrufer, und der genannten Chipkarte (2a) die ihm zugeordnet ist, durch Einsatz eines Servers der Art "TCP", um die genannte Chipkarte (2a) auf einer Adresse der Art "URL", einer sogenannten Schleifenschaltungsadresse anzurufen;

- Anruf des genannten zweiten Teilnehmers (1'b), des sogenannten angerufenen Teilnehmers durch die genannte Chipkarte (2a) über das genannte Internet-Netzwerk (RI), auf einer Adresse der Art "URL" die aus einer Adresse der Art "IP", die den genannten angerufenen Teilnehmer (Ab) bezeichnet, und während der sogenannten Ortungsphase bestimmt wird und aus der sogenannten Signalisierungsportnummer besteht;
- und Übertragung der genannten Signalisierungsdaten auf dem genannten Signalisierungskanal (CS) durch das genannte "Proxy" (27a) und über das genannte Internet-Netzwerk (RI).

6. Verfahren nach Anspruch 5, **dadurch gekennzeichnet, dass** das genannte Teilnehmersystem ein Endgerät (1b) aufweist, in welchem der genannte zweite Softwareteil eingebaut ist und das mit einer Chipkarte (2b) zusammenwirkt, in welcher der genannte zweite Softwareteil und der genannte Software-Anwendungsteil eingebaut sind, um das genannte "Proxy" (27b) zu bilden, und dass es die folgenden Schritte umfasst

- Anruf der Chipkarte (2b) des genannten Teilnehmersystems durch die Chipkarte (2a) des sogenannten anrufenden Systems; und
- Verbindung zwischen der Chipkarte (2b) des Endgeräts (1b) des sogenannten angerufenen Systems und diesem Endgerät, durch das sogenannte "Proxy", das dieser Chipkarte zugeordnet ist.

7. Verfahren nach Anspruch 5, **dadurch gekennzeichnet, dass** die genannte Kontrolle der vorbestimmten Eigenschaften der Austauschvorgänge der sogenannten Signalisierungsdaten einen Schritt einer einfachen oder einer gegenseitigen Authentisierung zwischen dem anrufenden Teilnehmer (Aa) und dem angerufenen Teilnehmer (Ab) umfasst, der von den genannten "Proxys" (27a, 27b) durchgeführt wird.

8. Verfahren nach Anspruch 5, **dadurch gekennzeichnet, dass** die genannte Kontrolle der vorbestimmen Eigenschaften der sogenannten Signalisierungsdaten einen Verhandlungsschritt für die Reservierung eines Routing-Weges umfasst, welchen die genannten Daten während der sogenannten Datenaustauschphase zu nehmen haben, der von den genannten "Proxys" (27a, 27b) durchgeführt wird.

9. Verfahren nach Anspruch 1, **dadurch gekennzeichnet, dass** die genannte "Proxy"-Funktion (27a) die sogenannten Multimediadaten kontrolliert, die im genannten Datenkanal (CD) gefördert werden, dass das Endgerät (1a) des genannten ersten Teilnehmersystems und das genannte zweite Teilnehmersystem (1'b) einen spezifischen Softwareteil (905a, 905b), einen sogenannten Datenaustauchteil umfassen, der einem Port der Art "UDP", einem sogenannten Datenport zugeordnet ist, der durch eine vorbestimmte Portnummer bezeichnet wird, und dass es folgenden Schritte umfasst

- Aufbau einer bidirektionalen Austauschsitzung zwischen dem Endgerät (1a) des genannten ersten Teilnehmersystems, des sogenannten Anrufers, und der genannten Chipkarte (2a) die ihm zugeordnet ist, durch Einsatz eines Servers der Art "UDP", um die genannte Chipkarte (2a) auf einer Adresse der Art "URL", einer sogenannten Schleifenschaltungsadresse anzurufen;
- Anruf des genannten zweiten Teilnehmers (1'b), des sogenannten angerufenen Teilnehmers durch die genannte Chipkarte (2a) über das genannte Internet-Netzwerk (RI), auf einer Adresse der Art "URL" die aus einer Adresse der Art "IP", die den genannten angerufenen Teilnehmer (Ab) bezeichnet, und während der sogenannten Ortungsphase bestimmt wird und aus der sogenannten Signalisierungsportnummer besteht;
- und Übertragung der genannten Multimediadaten auf dem genannten Datenkanal (CD) durch das genannte "Proxy" (27a) und über das genannte Internet-Netzwerk (RI).

10. Verfahren nach Anspruch 9, **dadurch gekennzeichnet, dass** das sogenannte angerufene Teilnehmersystem ein Endgerät (1b) aufweist, in welchem der genannte zweite Softwareteil eingebaut ist und das mit einer Chipkarte (2b) zusammenwirkt, in welcher der genannte zweite Softwareteil und der genannte Software-Anwendungsteil eingebaut sind, um das genannte "Proxy" (27b) zu bilden, und dass es die folgenden Schritte umfasst

- Anruf der Chipkarte (2b) des sogenannten angerufenen Teilnehmersystems durch die Chipkarte (2a) des sogenannten anrufenden Systems; und
- Verbindung zwischen der Chipkarte (2b) des Endgeräts(1b) des sogenannten angerufenen Systems und diesem Endgerät durch das genannte "Proxy" (27b), das dieser Chipkarte (2b) zugeordnet ist.

**11.** Verfahren nach Anspruch 5, **dadurch gekennzeichnet, dass** es außerdem eine Anmeldungsphase der genannten Teilnehmer in mindestens einem Verzeichnisserver ($SA_i$), mit Hilfe eines bestimmten Anmeldungsprotokolls(900a) und von sogenannten Teilnehmerprofildaten (903a), die die genannten Teilnehmer beschreiben, eine Ortungsphase des sogenannte angerufenen Teilnehmers durch Abfrage mindestens einer der Verzeichnisserver ($SA_i$), mit Hilfe eines bestimmten Ortungsprotokolls (901a) umfasst, wobei die bestimmten Anmeldungs- und Ortungsprotokolle Softwareteilen ($A_e$, $A_i$) zugeordnet sind, und wobei mindestens einer der genannten Softwareteile in mindestens einer Chipkarte (2a) des genannten ersten Teilnehmersystems abgelegt ist, dass die genannte Chipkarte (2a) mindestens eine zweite Softwaregesamtheit ($At_e$, $At_i$) umfasst, die in der Lage ist, eine Anweisungsfolge zu interpretieren und in eine Befehlfolge zu übersetzen, um mit dem genannten zweiten spezifischen Softwareteil (23a) zusammenzuwirken, so dass die genannte Chipkarte eine sogenannte "CGI" Gateway-Schnittstelle-Funktionalität bietet, wobei die Chipkarte mindestens eine der genannten Anweisungsfolgen die mindestens einem Eigentümer-Softwareteil zugeordnet ist, umfasst;

und dass es mindestens die folgenden Schritte umfasst:

1/ Öffnung eines ersten Datenaustauschsatzes zwischen mindestens dem genannten Endgerät (1) und der genannten Chipkarte (2a), für die Übertragung eines Antrags, so dass der "WEB"-Navigator (10) die Daten erhält, welche es ihm ermöglichen einen der genannten Softwareteile ($A_e$, $A_i$) für die Auswahl eines der genannten Verzeichnisservers (SAi) auszuwählen, und zu aktivieren;

2/ Öffnung eines zweiten Datenaustauschsatzes zwischen der genannten Chipkarte (2a) und dem genannten Endgerät (1), um ihm die Daten zu übertragen;

2/ Öffnung eines dritten Datenaustauschsatzes zwischen dem genannten Endgerät (1) und der genannten Chipkarte (2a), um Auswahldaten und optionale Parameter zu übertragen, wobei die genannten Daten und optionale Parameter ein Bezugnahme auf eine der genannten Anweisungsfolgen aufweisen, die dem genannten Eigentümer-Softwareteil zugeordnet sind;

4/ Interpretierung dieser genannten Anweisungsfolge, durch Einsatz der genannten "CGI"-Funktionalität, und Ausführung des genannten Eigentümer-Softwareteils ($A_e$, $A_i$); und

5/ im Ergebnis der genannten Ausführung, Öffnung eines vierten Datenaustauschsatzes zwischen der genannte Chipkarte (2a) und einem der genannten Verzeichnisserver ($SA_i$), Auswahl der genannten Auswahldaten, um einen Antrag für die Ausführung eines bestimmten Anmeldungs- oder Ortungsverfahren zu übertragen.

**12.** Verfahren nach Anspruch 1, **dadurch gekennzeichnet, dass** die genannte Multimediadaten Fernsprechdaten sind, und dass die genannte zu interpretierende Anweisungsfolge, die einem der genannten Eigentümer-Softwareteile zugeordnet ist aus einem Skript besteht, und dass die genannte zweite Softwaregesamtheit aus einem Software-Module, dem sogenannten intelligenten Skript-Übersetzeragenten ($AT_e$, $AT_i$) besteht, der Befehle gibt, die von den genannten Softwareteilen ($A_e$, $A_i$) verstanden werden können.

**13.** Verfahren nach Anspruch 11, **dadurch gekennzeichnet, dass** der genannte Schritt 1 / die Sendung eines Antrags der Art "HTTP" gemäß einem Protokoll der Art Internet durch Adressierung einer bestimmten Seite ($P_1$, $P_2$) in der "HTML"-Sprache, welche die genannten Auswahldaten und optionale Parameter enthält umfasst, wobei die genannte Adresse eine Adresse der Art "URL" für die Schleifenschaltung auf die genannte Chipkarte (2a) ist.

**14.** Verfahren nach Anspruch 11, **dadurch gekennzeichnet, dass** ein als von erstem Typ ($A_e$) genannter Softwareteil dem genannten Protokoll zugeordnet ist, der die Anmeldung eines der genannten Teilnehmer (Aa, Ab) in einem bestimmten Verzeichnisserver ($SA_i$) ermöglicht, dass die genannten optionalen Parameter aus Daten bestehen, die ein sogenanntes Teilnehmerprofil bestimmen, und mindestens sogenannte Erkennungsdaten des genannten anzumeldenden Teilnehmers (Aa, Ab) umfassen, und dass der genannte "HTTP"-Antrag des genannten Schrittes 3/ erste Daten umfasst, die anzeigen, dass der beantragte Vorgang die genannte Anmeldung ist, und zweite Daten, die es ermöglichen, durch den genannten Softwareteil des ersten Typs ($A_e$), eine Adresse vom "URL"- Typ zu erzeugen, die für den genannten bestimmten Verzeichnisserver ($SA_i$) kennzeichnend ist, und dass diesem Verzeichnisserver ($SA_i$) Daten die dem genannte Teilnehmerprofil zugeordnet sind während dem genannte Schritt 4/ derweise übertragen werden, die genannte Anmeldung des genannte Teilnehmers (Aa, Ab) durchzuführen, wobei die genannte Anmeldung die Bezeichnung einer Adresse der Art "IP" durch Zuordnung der genannte Verzeichnisserver-($SA_i$)-adresse und der genannten Erkennungsdaten für diesen Teilnehmer (Aa, Ab) umfasst.

15. Verfahren nach Anspruch 11, **dadurch gekennzeichnet, dass** ein als von zweitem Typ ($A_e$) genannter Softwareteil (A,) dem genannten Protokoll zugeordnet ist, das die Ortung eines Teilnehmers(Ab), den angerufenen Teilnehmer auf dem genannten Netzwerk der Art Internet (RI) ermöglicht, wobei der genannte angerufene Teilnehmer (Ab) in einem bestimmten Verzeichnisserver ($SA_i$) angemeldet ist, dass diese genannte Anmeldung mindestens sogenannte Erkennungsdaten des genannten Teilnehmers umfasst, dass der genannte "HTTP"-Antrag des genannten Schritts 3/ erste Daten umfasst, die angeben dass der beantragte Vorgang die genannte Ortung ist, und zweite Daten die den genannten angerufenen Teilnehmer (Ab) der geortet werden muss kennzeichnen, und dritte Daten, die es ermöglichen durch den Eigentümer-Softwareteil der zweiten Art ($A_1$) eine Adresse der Art "URL" erzeugen zu lassen, die für den genannten bestimmten Verzeichnisserver ($SA_i$) kennzeichnend ist, und dass die den sogenannten angerufenen Teilnehmer kennzeichnende Daten während dem genannten Schritt 4/ an diesen Verzeichnisserver ($SA_i$) derart übertragen werden, um die genannte Ortungsphase des genannten angerufenen Teilnehmers durch Suche einer Adresse der Art "IP" durchzuführen, indem die genannten Ortungsphasen dieses angerufenen Teilnehmers, die vom genannten Verzeichnisserver ($SA_i$) empfangen werden Anmeldungsdaten die in diesem abgelegt sind zugeordnet werden, und durch Rückübertragung der genannten Adresse der Art "IP" zu der Chipkarte (2a), um die genannte Ortung zu ermöglichen.

16. Chipkarte, die vorgesehen ist, um mit einem mit einem Chipkartenleser ausgestatteten Endgerät (2a) zusammenzuwirken, derart dass ein erstes Teilnehmersystem für die Verwaltung von Multimediadaten über ein Netzwerk der Art Internet, zwischen dem genannten ersten Teilnehmersystem und einem zweiten Teilnehmersystem gebildet wird, wobei die genannte Verwaltung mindestens eine Datenaustauschphase von sogenannten Signalisierungsdaten über einen sogenannten Signalisierungskanal, mit Hilfe eines bestimmten Signalisierungsprotokolls, sowie eine Datenaustauschphase der sogenannten Multimediadaten, über einen sogenannten Datenkanal, mit Hilfe eines bestimmten Vermittlungsprotokolls umfasst, die **dadurch gekennzeichnet ist, dass** die genannte Chipkarte (2a) einen Softwareteil (23a) umfasst der eine spezifische Vermittlungsprotokollschicht bildet, die außerdem mindestens eine erste selbstständige Softwaregesamtheit ($S_1$), der sogenannten Clientart und eine zweite selbstständige Softwaregesamtheit $S_2$), der sogenannten Serverart umfasst, wobei die genannten Gesamtheiten ($S_2$, $S_2$) derart zusammenwirken, dass die Chipkarte (2a) die Funktionalität eines "WEB"- Clienten/Servers bietet, und um den Datensautausch zwischen dem Endgerät (1a) des genannten ersten Teilnehmersystems und des genannten zweiten Teilnehmersystems (1'b) über ein Netzwerk der Art Internet(RI)zu ermöglichen; und dass die genannte Chipkarte (2a) außerdem einen zweiten Softwareteil für bestimmte Funktionseigenschaften umfasst, der Filter (28) genannt ist, und Protokolleinheitsdaten zu und/oder von diesen erster und zweiter selbstständigen Softwaregesamtheiten ($S_2$, $S_1$) der jeweiligen Clienten- und Serverart empfängt und/oder sendet, die in dem genannten spezifischen Softwareteil (23a) beinhaltet sind; wobei der genannte Anwendungsteil unter der Kontrolle des genannten spezifischen Softwareteils (S1) ausgeführt wird; und dass der genannte Filter (28) mit den genannten selbstständigen Softwaregesamtheiten ($S_2$, $S_1$) des genannten, zweiten spezifischen Softwareteils (23a)zusammenwirkt, um die Eröffnung einer Sitzung mit den genannten selbstständigen Softwaregesamtheiten ($T_2$, $T_1$) des genannten ersten spezifischen Softwareteils zu ermöglichen, um eine sogenannte "Proxy"-Funktion (27a) zu bilden, und vorbestimme Eigenschaften der Datenaustauschvorgänge, die zwischen dem genannten ersten Teilnehmersystem (1a, 2a) und dem genannten zweiten Teilnehmersystem (1'b), über mindestens einen der genannten Signalisierungskanäle (CS) und/oder Datenkanäle (CD) erfolgen, während den genannten Austauschphasen von Signalisierungsdaten und/ oder von Multimediadaten zu kontrollieren.

17. Chipkarte nach Anspruch 16, **dadurch gekennzeichnet, dass** die genannte Verwaltung der Übertragung von Multimediadaten ausserdem eine Anmeldungsphase der genannten Teilnehmer in mindestens einen Verzeichnisserver ($SA_i$), mit Hilfe eines bestimmten Anmeldungsprotokolls (900a) und von sogenannten Teilnehmerprofildaten (903a), die die genannten Teilnehmer beschreiben, eine Ortungsphase des genannten angerufenen Teilnehmers durch Abfrage mindestens eines der genannten Verzeichnisserver ($SA_i$ (SA;) umfasst; dass mit Hilfe eines bestimmten Ortungsprotokolls (901a), in der genannten Chipkarte (2a) mindestens ein Softwareteil ($A_e$, $A_i$) der den bestimmten sogenannten Anmeldungs- und Ortungsprotokolle zugeordnet ist abgespeichert ist, und dass die genannte Chipkarte (2a) mindestens eine zweite Softwaregesamtheit ($AT_e$, $A_i$,) umfasst, die mit dem genannten spezifischen Softwareteil (23a) zusammenwirkt, so dass die genannte Chipkarte (2a) eine sogenannte "CGI" Gateway-Schnittstelle-Funktionalität bietet, um die genannten Softwareteile ($A_e$, $A_i$) die den genannten Anmeldungs- und Ortungsprotokollen zugeordnet sind zu aktivieren.

FIG.1

SERVEUR D'ANNUAIRE SA — 91
910   911
PE   PL

9

Aa

RESEAU INTERNET

Ab

LOGICIEL DE TELEPHONIE
PE      PL      PSP
900a    901a    902a
PA      CCP     RTP
903a    904a    905a
90a

CS        CS
CD        CD

RI

9a

LOGICIEL DE TELEPHONIE
PSP     PL      PE
902b    901b    900b
RTP     CCP     PA
905b    904b    903b
90b
9b

PASSERELLE ITG — 92

93  RTC    94   CENTRAL PBX    95

RESEAU TELEPHONIQUE COMMUTE

EP 1 169 837 B1

33

FIG.2A
ART ANTERIEUR

FIG.2B
ART ANTERIEUR

FIG.3

FIG.4

Session "S-Agent"

FIG.5

AGENTS TRANSDUCTEURS DE SCRIPT

ATS₁ ATSᵢ ATSₙ

APPLICATIONS

A₁ Aᵢ Aₙ

23a
232a1
AGENT WEB
230a
MULTIPLEXEUR DE PAQUETS
2a
2010a
201a
AGENT "APDU"
GESTIONNAIRE "APDU"
200a
7816-3

13
132
AGENT RESEAU
130
MULTIPLEXEUR DE PAQUETS
1
102
7816-4 "APDU"
101
7816-3

FIG.6

## FIG.7A

NAVIGATEUR WEB

10

P

5a

13

3

2a

23a

1

## FIG.7B

$P_1$

ENREGISTREMENT SUR LE SERVEUR D'ANNUAIRE XXX

$Z_t$

CLIQUER ICI

$B_S$   ENVOI

## FIG.7C

$P_2$

ENREGISTREMENT   $Z_{t1}$

XXXX
XXXX
XXXX

$Z_{t2}$

$B_S$   ENVOI   RAZ   $B_{RAZ}$

## FIG.7D

XXXX
XXXX
XXXX

P

10

NAVIGATEUR WEB

1

$S_{WEB}$

SERVEUR WEB   CGI

2a

AGENT TRANSDUCTEUR DE SCRIPT

$AT_e$

APPLI-CATION "PE"

$A_e$

RI

SERVEUR D'ANNUAIRE

$SA_i$

RESEAU INTERNET

XXXX
XXXX
XXXX

P'

AGENT
TRANSDUCTEUR
DE SCRIPT

AT

10

NAVIGATEUR
WEB

TERMINAL

1

$S_{WEB}$

SERVEUR
WEB

CGI

APPLI-
CATION
"PL"

$A_t$

CARTE A PUCE

FIG.8

2a

SERVEUR
D'ANNUAIRE

$SA_i$

RI

RESEAU
INTERNET

---

1

Terminal

Navigateur
(client)

Proxy

Py

4

Serveur
TCP/IP
distant

Fonctions filtres
additives

Ff

Sv

Cl

RI

Serveur
TCP/IP

Client
TCP/IP

FIG.9
ART ANTERIEUR

FIG.10

902a
1a     127.0.0.1:PSCS        27a        RI        @ip:PSCD    @ip:PSLT    902b

PSP        CS        CS                    CS        CS        PSP
                                    RESEAU
                                    INTERNET
TERMINAL        2a                            27b        2b        TERMINAL
        CARTE                                    CARTE            1b
    ABONNE APPELANT                        ABONNE APPELE

Aa                                                    Ab

# FIG.11A

905a
1a     127.0.0.1:PDCS        27a        RI        @ip:PDCD    @ip:PSLT    905b

CD        CD        CD                    CD        CD        CD
(RTP)                                RESEAU                        (RTP)
                                    INTERNET
TERMINAL        2a                            27b        2b        TERMINAL
        CARTE                                    CARTE            1b
    ABONNE APPELANT                        ABONNE APPELE

# FIG.11B

FIG.12